# EUROPEAN PATENT SPECIFICATION

(11) **EP 3 439 235 B1**
(45) Date of publication and mention of the grant of the patent: **04.12.2019**
(21) Application number: 17184933.4
(22) Date of filing: 04.08.2017
(51) Int. Cl.: H04L 12/12

(54) **CONFIGURING AND OPERATING A SYSTEM WITH BUILDING AUTOMATION DEVICES**
KONFIGURATION UND BETRIEB EINES SYSTEMS MIT GEBÄUDEAUTOMATIONSVORRICHTUNGEN
CONFIGURATION ET FONCTIONNEMENT D'UN SYSTÈME AVEC DES DISPOSITIFS D'AUTOMATISATION DE BÂTIMENTS

(43) Date of publication of application: 06.02.2019
(73) Proprietor: ABB Schweiz AG, 5400 Baden (CH)
(72) Inventor: Kantz, Florian, 64404 Bickenbach (DE); Braun, Roland, 53859 Niederkassel Lülsdorf (DE)
(74) Representative: Marks, Frank

(56) References cited:
- US-A1- 2012 236 768
- US-A1- 2013 261 804
- US-A1- 2014 050 229
- US-A1- 2015 198 938

## Description

### Technical Field

The disclosure generally relates to devices for use in building automation, and more in particular relates to configuring the devices by using a configuration approach with a computer system, a computer-implemented method and a computer program, and relates to operating the devices.

### Background

### Introduction to BA devices, technology and standards

Modern buildings such as industrial buildings, office building, homes etc. comprise relatively large numbers of so-called building automation devices, hereinafter "BA devices", also called "field devices". The BA devices are physically installed into a room (or other unit or building segment) of the building and the BA devices provide services to that room, see also the document US 2015/198938 A1.

The BA devices provide functionality in at least two aspects:
- The building-related functions are functions in relation to the building (and to the services), such as, for example, lighting, air conditioning, providing safety and security, interacting with human users, optimizing the consumption of energy and other functions. The BA devices can provide the building-related functions automatically, with minimal user interaction.
- The communication functions relate to the communication of the BA devices with each other within the room or within the surroundings of the room. The BA devices interact by interchanging data in form of data packages or other forms of digital signals.

Functional interoperability is given only if both functions are adapted to each other. The data (of the communication function) comprise control commands, status queries and responses, as well as other data that is required to let the BA devices perform the building-related functions properly. The communication functions must fit the building-related functions, and vice versa. The data convey a meaning (frequently called semantic) that influences the performance of the building function in a particular way. For example, a sender device communicates a data package with ACTIVATE FUNCTION to a receiver device. Thereby, the sender device commands the receiver device to activate a particular building-related function. The receiver device understands the meaning of ACTIVATE FUNCTION and activates the function accordingly.

In operation, the BA devices provide most of the mentioned services to the room in combination as a technical system. However, incorrect communication puts the provision of the services by that system at risk. In other words, inter-device communication is mandatory for the technical system to provide the services.

From a structural point of view, the BA devices comprise components that are required for the building-related function, such as heaters and coolers, valves, electric and/or electronic circuitry, user interfaces, sensor units and so on; and the BA devices comprise components required for communication, such as input/output (I/O) units (e.g., via radio or wire). The BA devices comprise computers with processors, memory, interfaces etc. to support the components. The computers can have relatively small physical dimensions. The description refers to the computers of the BA devices as "processor/memory units".

The distinction into building-related functions and communication functions (likewise for components) is convenient for explanation, but further functions can be implemented as well, such as a self-diagnostics function.

The components of the BA devices can be implemented by different technologies both for the building-related functions and for the communication functions. Especially, the technologies can be different in relation to the communication. Communication technologies have their own specifics. The differences between the communication technologies range from physical aspects to logical aspects.
- The physical aspects relate, for example, to the physical medium (such as radio, wire) by that the BA devices exchange the data packages.
- The logical aspects relate, for example, to the encoding of the semantic in the messages that are conveyed or transported by the data packages. The signals need to be understood. (The code "ACTIVATE FUNCTION" corresponds to the activation of the function.) Protocols define the way how to encode the signals.

Standardization in the use of the communication technology is available. Standardization provides conventions (or schemes) to be applied to the physical aspects and to the logical aspects (in particular to the protocols). However, standardization is limited. Standardization is available within the communication technologies, but not across the communication technologies. Some standards concern the physical aspects only, other standards concern the logical aspects only, and some standards concern both aspects. For building automation, standards are, for example, KNX, BACnet, ZigBee and others.

### Examples

In a first simplified example, lighting devices belong to the application domain LIGHT and operate under a first communication technology, and HVAC devices belong to the application domain HVAC (Heating, Ventilation and Air Condition) and operate under a second communication technology. Both technologies are incompatible. The BA devices can't exchange data directly. Controlling these BA devices from a common user interface device is difficult. In other words, a user interface for LIGHT is not necessarily a user interface for HVAC. Providing a user interface for both (LIGHT and HVAC) as part of the technical system creates technical risks to the system, such as the risk of improperly functioning.

In a second simplified example, the BA devices use communication technology with common physical aspects, but with different logical aspects: A light switch using protocol A cannot directly exchange data with the light actor using protocol B. Gateway devices could translate data between both protocols, but the implementation of such a gateway would be specific to the particular building in that the BA devices are being used.

In a third simplified example, the BA devices use communication technology with common physical aspects, and with logical aspects that are partly standardized by a protocol. The BA devices communicate by so-called KNX communication objects for I/O processing purposes. The details need to be set up prior to operation (of the BA devices). Engineering tools provide information about the input/output (I/O) signals of the devices. Although this information is available as metadata, the metadata is human readable only but not readable by computers.

In a fourth simplified example, a window contact device needs to communicate with an HVAC device. Both BA devices can be considered to be in the same application domain HVAC. (This does not exclude that the window contact device may also belong to other application domain such as SECURITY or SUNSHADING.) The energy consumption of the HVAC device can be reduced by keeping a valve closed when the window is open. The window contact device would communicate a status signal to the HVAC device (window closed/open, or: window being closed, being opened), but the window contact device uses ZigBee communication technology and the HVAC device uses BACnet communication technology.

To summarize the examples, the number of different communication technologies in general (and of different protocols in particular) challenges the communication between BA devices, to let them provide the functions (building-related, communication) automatically. The differences gain further importance for situations where BA devices are to be used within the same application domain. Integrating devices with different technologies into technical systems creates the risk of device malfunction. Such as behaviour can have a negative impact on the function of the technical system of the building as whole.

### Timing

Further, having the BA devices physically installed (by hardware) into the building does not mean that the BA devices are ready for use. Preceding or following the installation, the BA devices need to be configured, mainly to establish the communication between the devices. Simplified, during configuration, a configuration user interacts with the BA devices to adapt the processor/memory units by setting parameters. The parameters relate to the communication function and - optionally - to the building-related function. As an example for the communication parameters, the BA devices receive unique digital communication addresses so that devices become "acquainted with each other". As an example for the other parameters, the BA devices receive a trigger that starts a self-diagnostic test to verify the proper performance of the building-related and of the communication functions. More in detail, setting the parameters can comprise invocation of object-oriented methods that belong to software of the processor/memory units of the BA devices.

### Challenges in general

Despite standardization within technologies, different conventions for the communication technologies (such as protocols) remain applicable across the technologies. The configuration user would have to take this into account. But this is only one side of the challenge. Technologies and standards do change over time, some standard up-dates provide backward compatibility, but some others do not.

The complexity rises with the number of parameters that govern the building-related function and the communication function. The complexity is a further factor that puts the operation of the devices (and thereby the functionality as a whole) at risk. The complexity also rises with the number of BA devices in the building that form a technical system.

### Summary

According to embodiments of the present invention, the complexity is addressed by a configuration device and - optionally - by a converter device (or "automation hub"). The configuration device executes a configuration method. The configuration method is a computer-implemented method for configuring a plurality of building automation devices ("BA devices") with a plurality of configuration settings to make a building automation system operable as a technical system. Configuring by settings comprises to enable the execution of object-oriented methods (and properties) that belong to the software for the processor/memory units of the BA devices. During operation, the BA devices perform their mentioned building-relation functions and - in parallel - perform the communication function (exchange data with each other, by inter-device communication of operation signals). Performing the functions comprises that the object-oriented methods (and properties) are actually executed by the processor/memory units of the BA devices.

The converter device - if used - executes a data-conversion method to adapt the data during the operation of the technical system. The data-conversion method is computer-implemented as well. Executing the data-conversion method comprises to convert (or translate) data between conventions (i.e., generally logical aspects of the communication technologies, and protocols in particular). This can comprise to translate data that communicate calls to object-oriented methods. Such an approach can be advantageous because it enables the communication of BA devices with different technologies (protocols in particular) within the same application domain.

The configuration device receives a functional specification of the technical system as well as device-specific data that represents the technical parameters of the devices. It then uses several mappings to identify the configuration settings and transmits the configuration settings to the BA devices. Synergetic efficiency results from the configuration device transmitting some of its mapping rules (as configuration settings) to the converter device.

The mappings comprise a communication level mapping that supports the communication of devices using different communication conventions (protocols), at different first and second levels. The communication level mapping is a bi-directional mapping. The first level (L1) is device-agnostic and the second level (L2) is device specific. Communication level mapping is applied during configuration and during operation.

The mappings further comprise a function-to-communication mapping. Once the building-related functions of a BA device are identified, the corresponding communication function is identified by mapping using appropriate semantics. The function-to-communication mapping is a uni-directional mapping to configuration settings, operation signals, and object-oriented methods, at the first level being the device agnostic level. This is considered advantageous because changes in the selection of particular devices (shortly before configuration, and during operation) leave the configuration settings, operation signals, and object-oriented methods unchanged. The adaptation to particular devices than relates to the communication level mapping only.

A computer-implemented method for configuring a plurality of building automation devices (that are installed as a technical system in a building to perform building-related functions) is performed prior to operation of the technical system. The method comprises receiving a first data-structure and a second data-structure. The first data-structure represents the function of the technical system during future operation by specifying inter-device communication between pairs of building automation devices. The first data-structure specifies the inter-device communication by operation signals at a first level being device agnostic. The second data-structure represents configurable technical parameters of the building automation devices. The technical parameters comprise communication parameters of the building automation devices that specify how the devices perform the inter-device communication during operation in form of data-packages. The operation signals are at a second level being device specific.

The step processing the first data-structure and the second data-structure is performed by mapping the operation signals at the first level to the operation signals at the second level depending on the technical parameters of the sender device and of the receiver device, and by determining configuration settings that adapt communication parameters that are required for sending and for receiving the data-packages by the building automation devices in the operation signals at the second level. The configuration settings are transmitted to the pairs of the building automation devices. The configuration settings are applied as software settings to memory units of the building automation devices to enable at least a sub-set of the building automation devices to send and receive the operation signals at the second level.

Transmitting can be performed by a configuration device that is communicatively coupled to the building automation devices in at least one communication direction.

Receiving and processing can be performed by a processing unit that is an integral part of the configuration device, and that is adapted to perform receiving and processing by interacting with a configuration user through a user interface. The first data-structure that represents the function of the technical system during future operation is received through that interaction with the configuration user.

Receiving, processing, transmitting and applying can be performed to obtain configuration settings for a particular building automation device that - during the future operation of the technical system - acts as a converter device wherein the converter device receives operation signals in the first level and that sends operation signals in the second level and vice versa, between devices in pairs.

The converter device can use a mapping that corresponds at least partly to the mapping during processing the first data-structure and the second data-structure.

The configuration settings can be being transmitted and applied to pairs of building automation devices such that during operation, the sender device causes the receiving building automation device to change the status and to perform its building-related function differently, and/or the sender device transmit status information to the receiver device.

The configuration settings can be sent and applied to the building automation devices such that the building automation devices change the operation parameters of their building-related function within minimal and maximal settings.

The configuration settings can enable a further subset of the building automation devices to send and receive the operation signals in the first level.

The configuration settings can enable the first subset of the of the building automation devices to send and receive the operation signals in the second, device-specify level, being selected from the group of: KNX, BACnet, Zigbee, free@home, Z-Wave, OpenAdr, MQTT, Modbus, and LonWorks.

Receiving the first data-structure and the second data-structure can comprise to receive a function-to-communication mapping, with relations between the building-related functions of the building automation devices to the communication function of the of the building automation devices.

A computer-implemented method for operating a technical system with a plurality of building automation devices that are installed in a building to perform building-related functions comprises: receiving a mapping for operation signals applicable to processor/memory units of the building automation devices, wherein the mapping corresponds to the mapping of operation signals obtained by the processing step, receiving operation signals from first building automation device acting as a sender device; converting the operation signals according to the mapping; and sending the converted operation signal to second building automation device acting as a receiver device.

A computer program product - when loaded into a memory of a computer and being executed by at least one processor of the computer - performs the steps of the computer-implemented method for configuring a plurality of building automation devices.

A computer program product - when loaded into a memory of a computer and being executed by at least one processor of the computer - performs the steps of the computer-implemented method for operating a technical system in a building.

A computer device with processor and memory for configuring a plurality of building automation devices that are installed as a technical system in a building, the computer device is adapted to perform a method for configuring the building automation devices.

A computer device is adapted to be installed to a technical system with a plurality of building automation devices that are installed in a building to perform building-related functions, wherein the computer device is one of the building automation devices; the converter device is adapted to perform the computer-implemented method.

### Brief Description of the Drawings

FIG. 1 illustrates a technical system by an overview to a plurality of building automation devices that are installed in a part of a building;
FIG. 2 illustrates a flow-chart diagram with an overview to several phases in providing devices to the building;
FIG. 3 illustrates an overview to mappings that are applied by a configuration device and - optionally - by a converter device;
FIG. 4 illustrates the configuration device with its components;
FIG. 5 illustrates a simplified user interface component of the configuration device;
FIG. 6 illustrates a flow-chart diagram for a configuration method to operate the configuration device;
FIG. 7 illustrates a flow-chart diagram for a data-conversion method to operate the technical system, by using a converter device; and
FIG. 8 is a diagram that shows an example of a generic computer device and a generic mobile computer device, which may be used with the techniques described here.

### Detailed Description

### Introduction

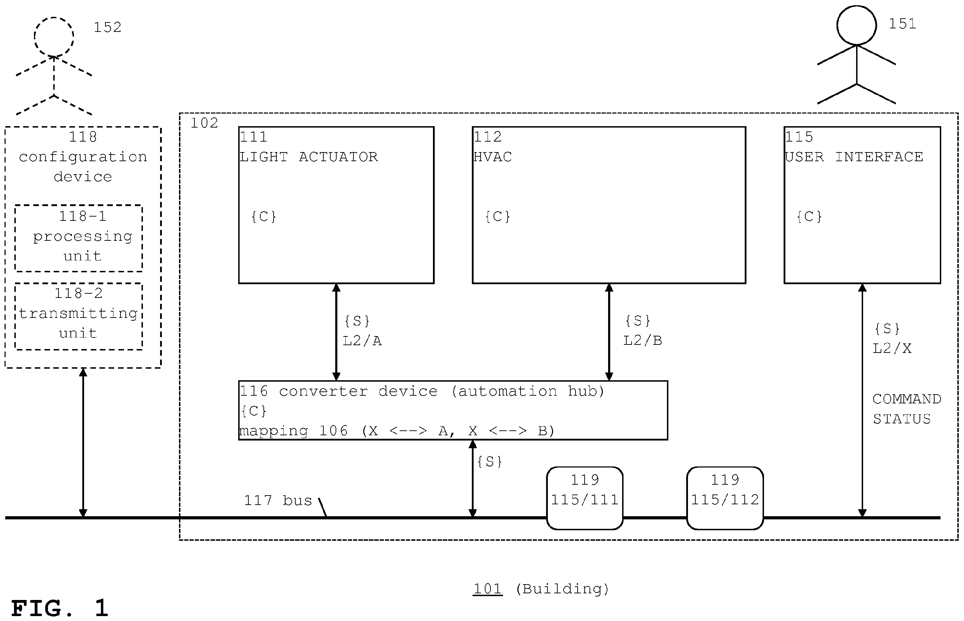

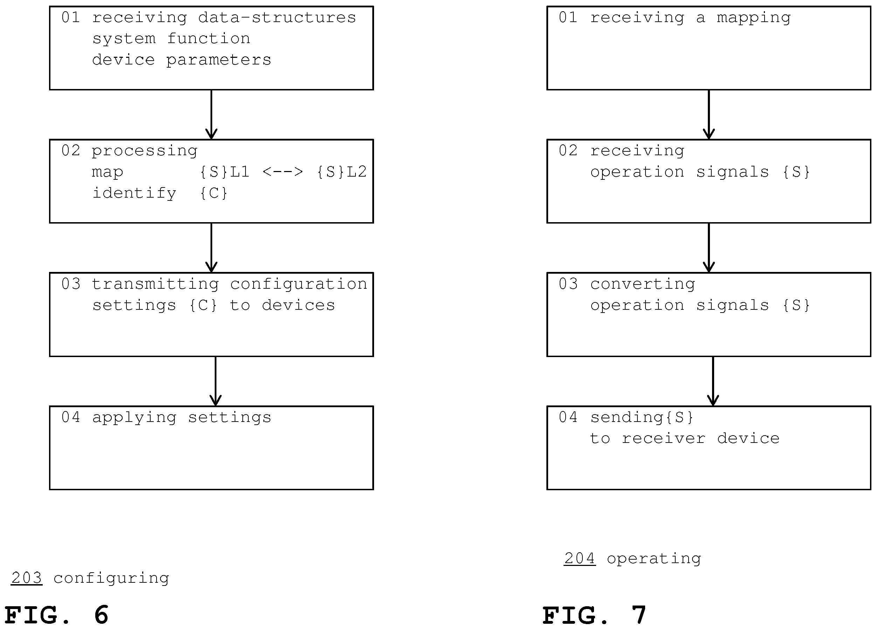

The description starts with a much simplified example (FIG. 1) to introduce a technical system during operation. The technical system comprises BA devices located in a building. The description uses the example (FIG. 1) to describe challenges caused by different communication protocols. The description then addresses the challenges by explaining how this technical system has become operational (i.e. able to perform the building-related functions). There are time phases to distinguish, such as a configuration phase with a configuration method (details in FIG. 6) and an operation phase with a data-conversion method (details in FIG. 7).

The description uses the term "layer" in its conventional and standardized wording in phrases such as "OSI-layer", "physical layer", "medium access control layer" etc. For clarity reasons, the description uses the term "level" to differentiate abstraction for signals, settings, and method calls in the meaning of "abstraction layer".

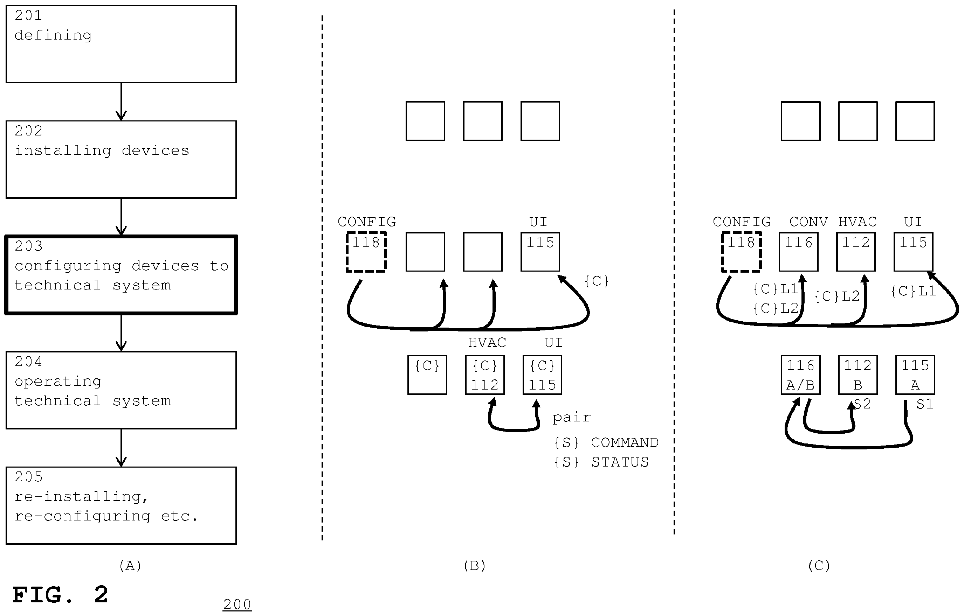

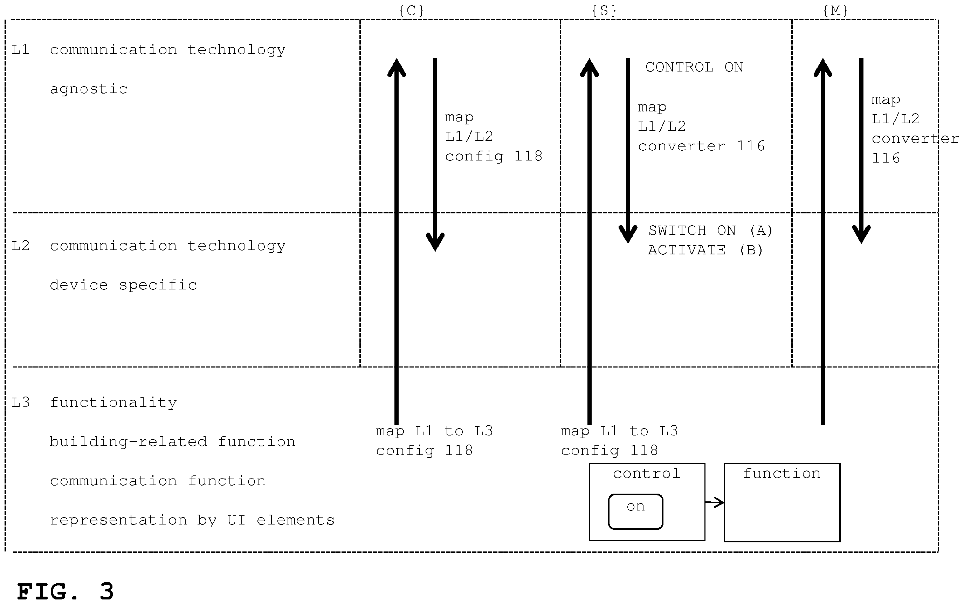

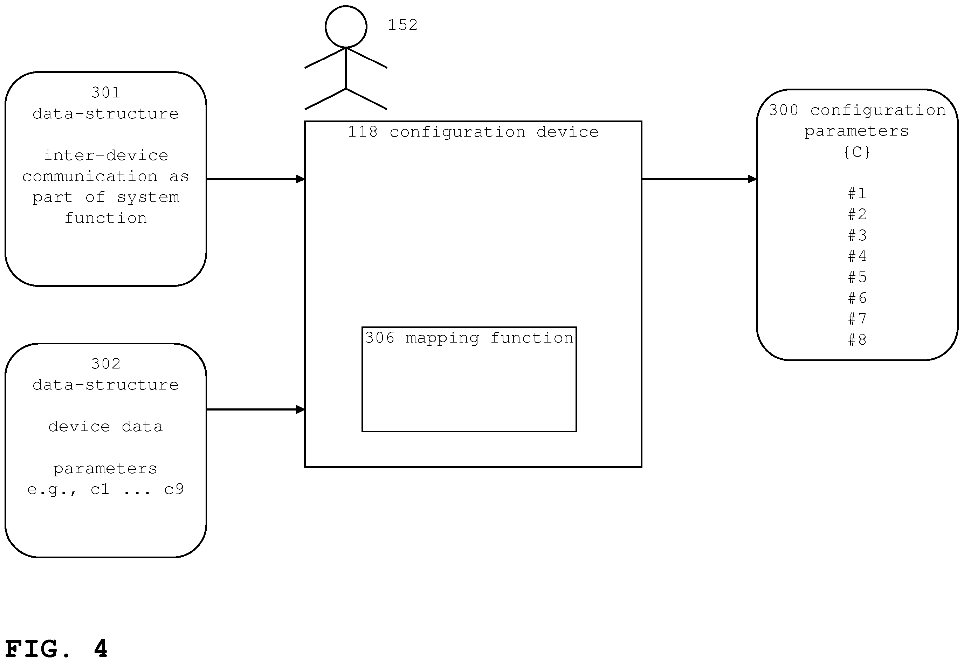

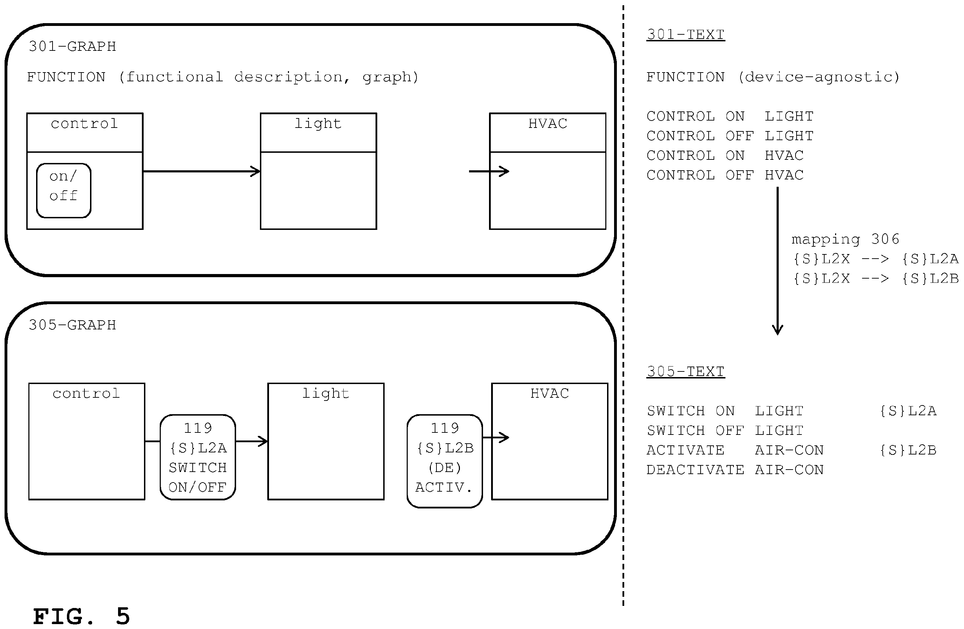

Inter-level and intra-level mapping according to rules can be part of both methods, and some of the mapping rules are used for both methods. For simplicity, the description uses FIG. 2 to in-troduce a communication mapping of configuration settings and of operation signals between a first abstraction level L1 and a second abstraction level L2. The description uses FIG. 3 to explain plain mapping in a broader context, with the communication mapping and -in addition to that- with a function-to-communication mapping with a focus on semantics. FIG. 4 and FIG. 5 explain how the mappings are performed by a configuration device, in interaction with the configuration user.

### Overview to system and phases

FIG. 1 illustrates technical system 102 (dotted line) by an overview to a plurality of BA devices 111, 112, 115 and 116 that are installed in building 101. Dividing building 101 into logical units (e.g., rooms, floors, a building entrance area and so on) is possible. Such a division is convenient in view of human users of the building. Building user 151 located in a particular room (at least temporarily). For simplicity, the description assumes that in the example of FIG. 1, BA devices 111, 112, 115 and 116 are providing functions for that room (but not for other rooms).

The description labels the BA devices according to their functions as:
- light actuator device 111,
- HVAC device 112,
- user interface device 115 and
- converter device 116 (being an optional device).

The functions can be building-related functions (such as providing light, conditioning the air, interacting with users etc.).
- Light actuator device 111 provides artificial light (i.e. in the domain LIGHT). It is implemented, for example, by light emitting diodes (LEDs) and by electronic circuitry for controlling them.
- HVAC device 112 provides heating or cooling, and that lets the air in the room to become humid or dry.
- User interface 115 provides user interaction for controlling light actuator device 111 and HVAC device 112.

Building user 151 interacts with user interface device 115 that is assigned for the particular room. For simplicity of explanation it is assumed that light actuator device 111, HVAC device 112, and converter device 116 do not necessarily comprise user interface elements to be operated by building user 151.

Technical system 102 comprises the BA devices (i.e., 111, 112, 115, 116 and many other devices that are not illustrated) as well as communication equipment and power equipment. Communication equipment that allows communication between the devices is symbolized by bidirectional arrows. The communication equipment can physically be implemented by media (such as cables, fiber optics, radio etc.) and interfaces (I/O units, antennas, radio transmitters and receivers etc.). Computer bus 117 symbolizes such communication equipment by way of example. In the topology, computer bus 107 can be accessed by BA devices 115 and 116 directly, and by BA devices 111 and 112 indirectly (via converter device 116). Other topologies can be used as well, such as networks. As the figure is simplified, some well-known implementation details are omitted from explanation, such as power equipment. The BA devices are powered with electrical energy by AC/DC power supplies, or otherwise.

BA devices 111, 112, 115, 116 operate within technical system 102 according to technical parameters. The description provides more comprehensive discussion of the technical parameters further below.

The BA devices 111, 112, 115, 116 communicate with each other by sending and/or receiving signals in digital form: operation signals {S}. For convenience of explanation, it is assumed that the signals are communicated in the form of data-packages 119 (that are addressed to particular IP-addresses). The figure illustrates data package 119 between device pairs 115/111 and 115/112. {S} can comprise parameters.

FIG. 1 also illustrates configuration device 118 that communicates with BA devices 111, 112, 115 and 116 during configuration (cf. FIG. 2, prior to operation). Device 118 is communicatively coupled to the BA device at least in one direction (to the BA devices).

Each of the devices - the BA devices and the configuration device - comprise at least one computer processor unit and at least one computer memory unit. Configuration device 118 uses its processor and memory units to perform the configuration method (cf. FIG. 6). The configuration method results in configuring the BA devices: BA devices 111, 112, 115 and 116 receive technical parameters that are relevant to perform their functions. The devices receive the parameters through configuration settings {C}. The identification of configuration settings {C} is the main output of the configuration device. The BA devices store the configuration settings {C} in their memory units and/or apply the configuration settings {C} to modify parameters. The configuration settings {C} are different for each device, but for simplicity of explanation, FIG. 1 uses {C} without any indices.

Configuration device 118 communicates with the BA devices via bus 117 or otherwise. It is assumed that this communication can be established with minimal configuration efforts. Configuration device 118 is illustrated by dashed lines because it can be removed when configuration has been completed (prior to the operation of technical system 102).

As illustrated, configuration device 118 can have two units:
- Processing unit 118-1 processes device data to configuration settings {C}, and
- Transmitting unit 118-2 transmits the configuration settings {C} to the BA devices (i.e. in one communication direction to the BA device).

FIG. 1 illustrates configuration device 118 together with configuration user 152, in case of a split into units 118-1 and 118-2, there would be two user roles.

### Usage scenarios from the view point of the building user

The description now refers to simplified usage scenarios from the view point of building user 151:
- In a first usage scenario, building user 151 interacts with user interface device 115 to switch light actuator device 111 "on" or "off", and to switch HVAC device 112 "on" or "off". In other words, user interface device 115 determines if building user 151 prefers to work with artificial light or not (application domain LIGHT) determines if building user 151 prefers to have the air conditioned (or not conditioned, application domain HVAC). In this scenario, the building-related functions are interacting (device 115), providing light (device 111) and conditioning the air (device 112).
- In a second usage scenario, building user 151 is being informed about temperature and humidity measurements in the room etc. Building user 151 can select target values within pre-defined min/max values. The building-related functions of the BA devices are that of the first usage scenario (i.e., interacting, providing light, conditioning the air), but further functions are applied with more granularity (e.g., reacting to temperature indications from the user as a further function).

### Building-related functions and communication functions

The usage scenarios are also examples for the interrelation of the building-related functions (of the BA devices) with the communication functions (of the BA devices). This interrelation provides the functional interoperability between the BA devices. In performing the communication function, the BA devices 111, 112, 115 and 116 send and/or receive the operation signals {S} (in form of the data packages 119). The BA devices 111, 112, 115 and 116 process {S} to perform the building-related functions accordingly. The parameters of the devices (set and/or modified by {C} and by {S}) can determine the functional behavior of the BA devices.

As used herein, a BA device has the mentioned building-related function and has the communication function (i.e., inter-device communication with other devices in the building). For example, HVAC device 112 can keep the air at a temperature between 15 °C and 25 °C (range of the temperature parameter). But HVAC device 112 performs this temperature keeping function only if it has received an operation signal {S} with a COMMAND through its communication function. If in the first usage scenario, the building user 151 has provided "on" instructions, user interface device 115 communicates this data to HVAC device 112, and HVAC device 112 keeps the room temperature within that range.

### Functional settings

The building-related functions (and the communication functions) can be modified by configuration settings {C}. In the example, HVAC device 112 can be configured to keep the air at temperatures between 18 °C and 22 °C. In such a case, the temperature range has been limited by configuration (using communication from configuration device 118 to the HVAC device 112). The configuration settings {C} change the parameters, so that the memory unit of the HVAC device stores the 18/22 range.

There is a relation to the operation signals {S}, applied to the usage scenarios:
- In the first usage scenario, building user 151 provides "on" instructions (leading to a {S} COMMAND) and the room temperature will be in that modified range.
- In the second scenario, building user 151 indicates a desired temperature of 20 °C. Data that communicates this desired temperature to the HVAC device is part of an operation signal {S}, HVAC device 112 can keep the air at the temperature. Slightly modified, building user 151 may desire a temperature outside that range, HVAC device 112 returns {S} with STATUS signal that such a temperature is no available.

As in the usage scenarios, user interface device 115 sends data packages 119 with operation signals {S} to light actuator device 111 (to provide light or not) and to HVAC device 112. In the example, user interface device 115 acts as a sender device that communicates data package 119 with commands (operation signal {S}) to the light actuator device 111 and to the HVAC device 112 acting as receiver devices. Thereby, the sender device commands the receiver device to activate (or de-activate) a particular building-related function (i.e., providing light, conditioning the air). In the STATUS example, HVAC device 112 is sending, and user interface device 115 is receiving.

More in general, the operation signals {S} of the communication function comprise
- control commands (for example, as in the first and second usage scenarios),
- status queries (for example in the second scenario: measured temperature), and
- responses (for example in the modified second scenario: non-availability of temperature), as well as other data.

As mentioned, the data is required to let the BA devices perform the building-related functions properly. The communication functions must fit the building-related functions, and vice versa. The data convey a meaning (frequently called semantic) that influences the performance of the building function in a particular way.

### Different domains and technologies

However, conveying the meaning by the operation signals {S} (i.e., making sender device and receiver device to understand each other) faces a number of constraints, such as:
- Communication technologies can be different for different application domains, as mentioned above in the background section.
- Specific building-related functions require the identification of appropriate conventions for the signals {S} (and for the settings {C}).

Both constraint groups are depending from each other, so that the complexity increases. System administrators would need to deal with this. Both the signals {S} and the settings {C} need to take the differences into account. More in detail, BA devices 111, 112 belong to different application domains, here: LIGHT and HVAC.

### Overview to an approach that addresses the constraints

The following measures address these and other constraints:
- Phases are separated (cf. FIG. 2). Configuration device 118 provides communication settings {C} (to the BA devices) prior to operation. The BA devices process the setting to provide the operation signals {S} accordingly.
- Operation signals {S} and configuration settings {C} (for the communication function) are differentiated into first and second abstraction levels. Inter-level mapping and intra-level mapping (e.g., protocols A, B, X) is available during a configuration phase, and also available during operation (i.e. at system run-time, by converter device 116). Converter device 116 transforms operation signals {S} between the first and the second levels (optionally, within the second level).
- Descriptors are available at a third level that represents the relation between the building-related functions and the communication functions (cf. FIG. 3).
- Configuration device 118 can implement the third level L3 that associates BA devices with user interface elements. Configuration user 152 can define the functional interoperability (of the BA device).
- There is a further mapping from the third level L3 to the first level L1 (optionally: to the second level), during configuration time. This allows the configuration device to hide technological differences from configuration user 152. For configuration user 152, technical system 102 under configuration appears (in the user interface, cf. FIG. 5) as a homogeneous system, but during operation, technical system 102 can be heterogeneous system.
- Since {C} and {S} etc. are separated within the levels, mutual influence is minimized. In other words, there is encapsulation within the levels. Changes at one level do not influence the other level. Practically this can have advantages for configuration user 152 who is relieved from investigating differences that result, for example, from different conventions by different device manufacturers. Configuration user 152 can concentrate on the building related functions of the BA devices (in level L3, with symbolic user interface elements as in FIG. 5), with automatic identification of the communication functions through mapping (i.e., L3 to L1).

### Phases

FIG. 2 illustrates a flow-chart diagram with an overview to several phases 201-205 of a process 200 of providing devices to the building. The figure is dashed-line-divided into columns (A), (B), and (C) with a flow-chart in (A) and with structural diagrams in (B) and (C) that illustrate devices (square symbols) communicating with each other (arrows).

A first phase 201 can be summarized as defining the BA devices, including selecting BA devices from a catalogue or from a database. The first phase can encompass to up-load device data to the configuration device (device data-structure 302 in FIG. 4). It is noted that up-loading data for the selected devices is sufficient. Device data for other devices (i.e., non-selected devices) is not required. First phase 201 can use information that is available in a third level (details in FIG. 3).

A second phase 202 can be summarized as installing the devices. This comprises physically moving (the hardware of) the BA devices (and the other equipment) into the building, for example, into a particular room, or to a different location from where the device act to the room (e.g. into a control cabinet or switchbox located outside the room). The devices can be physically enabled for inter-device communication (e.g., by being connected to the bus, to the network etc.).

A third phase 203 can be summarized as configuring the BA devices. Configuring comprises to apply software settings (i.e. to processor/memory units) of the BA devices so that the BA devices can perform the building-related functions (e.g., provide light, condition the air etc.) and can communicate with each other (inter-device communication). As mentioned, both functional aspects are related: the BA devices do not perform the building-related functions without communicating with each other. The action of configuring is symbolized by configuration device 118 (cf. FIG. 1) that transmits configuration settings {C} to devices 115 (as in column (B) and transmitting {C} to devices 115, 112, 116 (as in column (C)). The devices are now able to perform the function according to parameters, among them the configuration settings {C} (i.e., stored in their memory units) and/or among them parameters that are modified in applying {C}.

In the third phase 203, the configuration user (152 in FIG. 1) can use information that is available in the third level (L3) regarding the functional interoperability of the devices. The configured BA devices in combination with the other equipment (of the building) now form technical system (102 in FIG. 1) that is operable. Configuration device 118 is used at least temporarily (dashed lines), and is not part of the technical system. In configuration phase 203, configuration device 118 can obtain representations of one or more usage scenarios - technically in the form of scenario data-structures - by interacting with the configuration user or by loading pre-defined scenarios (details in FIG. 4 and FIG. 5). Column (C) of the example looks at the mapping: Configuration device 118 transmits configuration settings {C} for different levels, {C} in L1 and in L2 to converter device 116, {C} in L2 to HVAC device 112, in L2 to user interface device 115 etc.

A fourth phase 204 can be summarized as operating the technical system. The devices perform their device-specific functions. The fourth phase can be considered as the "run-time" of the BA devices. As part of their function (columns (B) and (C)), the devices communicate with each other by sending / receiving data. The communication is again symbolized by bold arrows.

As in column (B) of the example, user interface device 115 sends data to HVAC device 112, and HVAC device sends 112 data to user interface device 115. The devices exchange data as operation signals {S}. Again simplified, {S} can be data by that
- the "sender device" causes the "receiver device" to change its status (e.g., user interface device 115 being the sender and instructing HVAC device 112 to go "on" or "off"), collectively called COMMAND DATA.
- the sender device informs the receiver device (e.g., HVAC device 112 sending to user interface device 115: sensor data regarding a measurement value, data corresponding to current operation parameter), collectively called STATUS DATA.

The terms "sender device" and "receiver device" are indicative of roles that the devices in a pair perform during operation.

Column (C) of the example looks at the mapping. User interface device 115 sends command data S1 to converter device 116 using protocol A. Protocol A belongs to a second level L2. Converter device 116 maps S1 to signal S2 in protocol B. Protocol B is also a second level L2 protocol. Mapping is also available for status data. Mapping between communication protocols can also be accomplished across the levels. The description will explain further examples in connection with protocols A, B, X (in level L2).

A fifth phase 205 can be summarized as a partial repetition of previous phases, such as - optionally - re-installing, re-configuring and so on. For simplicity of explanation, is it assumed that in phase 203 only {C} is allowed for communication from configuration device to the BA devices, that in phase 204 only {S} is allowed (between the BA devices), but that in phase 205 both types of data {C} and {S} are allowed.

The configuration/operation classification is convenient for illustration. There is - however - no need to define start and end conditions of the phases by exact time points: the phases can overlap. For example, while one device is already in operation within the technical system, other devices are being configured. In other words, the technical system is growing with every device that is being configured. The person of skill in the art knows to apply further measures that are not ex-plicitly described, such as testing the technical system, documenting the operation of the technical system, replacing devices (and equipment) and so on. Some of these actions can involve the use of the configuration device so that these actions can be considered as (re) configuration.

### Transition

To put the mappings into context of different technologies both for the building-related functions and for the communication functions, the description now looks at standards, parameters and protocols.

### Standards

The BA devices communicate with each other according to pre-defined communication conventions (being collections of communication parameters). The communication conventions can be described according to standards and/or according to the OSI-layers (International Telecommunication Union ITU-T X.200 (07/1994)). There are standardized predefined technical parameters. Since the conventions are well-known, the description recites communication parameters (or data transport parameters) by examples only:
- (c1) In buildings, there are different media of communication available. Data can be communicated by as electrical signals (i.e. via wires) or as electromagnetic radio signals (i.e. wire-less signals). Parameters mainly relate to the physical properties of the signals.
- (c2) Media access conventions allow the identification of particular devices, and avoid signal collisions. Parameters mainly relate to the definition of addresses, the timing of the data-packages etc.
- (c3) To deal with signal interruptions, some signals are communicated in redundancy, there can be parity bits, check bits etc. Parameters mainly relate to coding (and de-coding).
- (c4) The amount of data to be communicated can be defined as well, for example, by the symbol rate, measured in symbols per second ("baud"). Parameters can indicate a baud rate, for example for a rated baud rate (i.e., a desired rate) or a measured rate (i.e. actually available rate).
- (c5) Measures to ensure data integrity, authenticity etc. can be provided by encryption and decryption. Parameter comprises the identification of encryption methods, of keys and certification etc.
- (c6) The format of the data to be communicated is defined by conventions. A particular data format convention is the XML-format. Parameters are related, for example, to the identification of a particular syntax that is used in the data-packages. The description uses the simplified example of protocols in conventions, such as A, B or X.
- (c7) User interfaces can have technical descriptors (e.g., by metadata). Parameters relate, for example, to the choice of symbols, pictograms, phrases in different natural languages and so on.

Such a list of parameters can't be exhaustive, and in real implementations there are much more parameters for a variety of different communication conventions. Some (but not all) of the communication parameters are to be configured (configuration settings {C}). The description now leads to an example for such to-be-configured parameters, by way of simplification. Subsets of the communication parameters are referred to as protocols. Much simplified, exemplary communication protocols are for example:
- KNX is a standardized, OSI-based network communications protocol for building automation. The physical layer can be implemented by twisted pair wiring, by powerline networking, by radio, by an infrared line or by Ethernet. KNX uses a particular device description language that has its basis in XML (Extensible Markup Language).
- Zigbee relates to communication protocols used to create personal area networks with small, low-power digital radios. The physical layer and the medium access control (MAC) layer are implemented according to IEEE 802.15.4. The IEEE standard explains communication parameters, such as the applicability of different frequency bands.
- BACnet is a communications protocol for a Building Automation and Control (BAC) network.
- free@home is a technology by that information is stored within the devices.
- Z-Wave is a wireless communications protocol used primarily for home automation.
- Open Automated Demand Response (OpenADR) is a standard to send information and signals to equipment that uses electrical power.
- MQ Telemetry Transport (MQTT) is an ISO standard on top of the TCP/IP protocol.
- Modbus is a serial communications protocol for programmable logic controllers (PLCs).
- LonWorks is a communication protocol used in buildings, and elsewhere.
- OPC UA (Open Platform Communications Unified Architecture) is a machine to machine communication protocol for industrial automation.

The protocols have been developed over time for particular use cases and for particular domains. In the example of FIG. 1, light actuator device 111 is likely to be a device operating according to the KNX protocol. HVAC device 112 is likely to be a device operating according to BACnet. This is an example for devices in different protocols that make the technical system a heterogeneous system.

There is a need to configure some of the parameters, not only at the high-level granularity to distinguish KNX, BACnet, etc. but also within such protocols. For example, Zigbee devices need configuration by indicating one of the allowable frequency bands.

It is noted that the communication parameters (and other parameters) are not independent from each other. For example, (c4, amount of data) can influence (c7, device descriptor). Or, in the example of the communication protocols, they may use a standardized EDDL, but beside that they use so-called protocol specific station descriptors (PSSD).

### Parameters

As mentioned, the parameters are related to the operation of the devices, and the parameters are technical parameters. The parameters have different aspects (given in uppercase letters, to symbolize that the configuration device can process the parameters in different layers), some of the parameters are identified and/or changed through configuration settings {C}. As mentioned, the configuration settings {C} are available as input to and as output of the configuration device. The configuration device deals with the complexity of the parameters in general by separating them according to these aspects.

This can imply that configuration device 118 stores a particular configuration setting (or even a parameter that is not yet released as a configuration setting) in different data-structures (or different layers). Since the data structures/layers are related (and associated) with each other, the parameters are processed in their integrity. Simplified, the aspects can be considered by looking at FIG. 1 (BA devices) and FIG. 2 (phases). This will be explained in the following:
FUNCTION (relation of devices within the technical system): A first parameter group relates to parameters that are applicable for particular devices (if taken alone, i.e. for device 111, 112, 115 etc.). For example, there are separate parameters for light actuator device 111 and for HVAC device 112. The parameters of the first group are available (and known) from device manufacturers (in form of catalogues or the like, for particular device types. The parameters of the first group can be available to configuration device 118 in the installing phase (or even earlier). A second parameter group relates to parameters that are applicable for the integration of particular devices into a technical system. In the example, BA devices 111, 112, 115 and 116 need to be integrated. Some of the parameters are inherently incompatible (e.g., communication parameters (c1, wire or radio), not being compatible), some of the parameters can be made compatible during configuration (e.g., communication parameter (c2) by assigning addresses to devices, being a configuration of the addresses), some of the parameters can be made compatible by using intermediate devices during operation (e.g., (c6), (c7) via converter device 116). The parameters of the second group are available to configuration device 118 prior to or during configuration.
COMMUNICATION (parameter selection aspects for communication parameters): The devices are being installed with parameters in parameter ranges (e.g., (c1) numerical min/max values for radio frequencies, (c2) address spaces), parameter sets (e.g., communication parameter (c6) identifiers for data formats) and so on (example of the communication parameters). Simplified, the ranges etc. stand for conditions under that the devices can operate. Within the technical system, the devices will operate according to parameters that are selected from the ranges (or from the sets) by configuration. The configured parameters are indications in the memory unit of a particular device to operate under particular conditions, within the range. For example, the above-mentioned Zigbee devices (c1) (c2) transmit and receive data in frequency bands 868-868.6 MHz, 902-928 MHz, and 2400-2483.5 MHz, but once configured, a particular device operates at the 868-868.6 MHz band only. Simplified, this selection aspect can be related to configuration phase 203 (cf. FIG. 2). Some of the configuration settings {C} indicate the frequency band that has to be used.
PROTOCOL. This is a sub-set of COMMUNICATION and described here in the example by conventions. For example, a sender device (such as device 115) sending a data package 119 with SWITCH ON to a receiver device (such as device 111, or 112) can cause the receiver device to the switched on, provided that the receiver device is configured (or otherwise enabled) to understand SWITCH ON as a command to change its status. In the example, SWITCH ON is part of protocol A (that is understood by device 111, but not by device 112). USER-INTERFACE. Parameters can relate to the setting of user interface elements. This is applicable for devices that comprise user interfaces, such as user interface device 115 and that allows interaction with building user 151 (cf. FIG. 1). Parameters can comprise the definition of the above-mentioned semantics, for example, the identification of a particular meaning for the building user (e.g., a symbol "ON" in the meaning "active"). Parameters can also comprise the way user interface elements (or controls) can be implemented by the user interface. PARAMETER-INTERRELATION (or interdependency): Parameters can be interrelated with each other. For example, if a parameter indicates that the building is located in Europe, the (range) parameter for the frequency band is 868-868.6 MHz and 2400-2483.5 MHz and the configuration setting {C} comprises the selection of one of these bands. Such interrelation can be available to the configuration device prior to configuration (usually even in the defining phase)
GRANULARITY: Simplified, an operation mode of a device can be considered as binary status, such as on/off, active/not-active, working/stand-by etc., the mode can be communicated between devices as part of an operation signal {S}, as COMMAND or STATUS (cf. FIG. 2). In the first usage scenario, {S} comprises the command to switch a device on or off. However, devices can communicate more details, such as a particular temperature (e.g., 20 °C as a desired temperature). In this case, configuration is needed to let the BA devices understand a particular data package to indicate this particular temperature (as COMMAND, or STATUS). In a different aspect of granularity, a BA device can be a single-function device (e.g., "light only" as device 111) or a multi-function device (e.g., temperature and humidity regulation as two building-related functions of device 112). Modular devices can be combined. The technical descriptors of devices (e.g. DDL) can be adaptive to the modularity. For example, a single device with multiple functions can have a single network address (i.e. implemented by communication parameters (c1) or (c2), but different logical addresses to trigger the functions (i.e. communication parameter (c7)).
ORIGIN OF PARAMETERS: Parameters can be related to the design of the device. For example, device 111 operates under communication parameters set by the KNX standard. Parameters can be related to the origin during configuration. Configuration settings {C} have the origin in configuration device 118. Device parameters during operation have the origin in a BA device, for example, a value that represents temperature in a room can be communicated in a data package from a sensor device (cf. STATUS). Or, a value that represents a desired temperature can be communicated from user interface device 115 (cf. COMMAND). Parameters can be set by users. Configuration user 152 may, for example, select a temperature range for HVAC device 112 (e.g., between 18° and 22 °C) and let configuration device 118 communicate that range to device 112 (that applies this 18/22 range as parameter). The building user 151 can then select a desired temperature (from user interface device 115). Such parameters would be available during the operation phase, without availability to configuration device 118.
FREQUENCY OF CHANGE: Some parameters may change over time. Re-configuration may become necessary. As a general rule, configuration settings {C} can be changed during configuration only, but during phase 205, the configuration settings {C} can be changed again. For example, device 112 can send value for temperature and humidity to device 115 as STATUS data (operation signal {S}) periodically, for example, every minute. The time interval between subsequent data-packages can be adapted by re-sending configuration settings {S} (configuration user), or - during operation - by an appropriate signal from device 115.
TECHNOLOGY DISCLOSURE: As mentioned, the parameters are technical parameters. Some of the parameters may appear (to the configuration user) as a "technology agnostic parameter". For example, configuration device 118 can represent BA devices by symbols (such as pictograms) on the user interface. However, the parameters remain to be technical parameters.
PARAMETER INHERITANCE Parameters and conventions can be inherited, or applied to multiple devices. An example is explained in the first usage scenario. During operation, a first parameter enables device 115 (user interface) to send an on/off command to HVAC device 112; a second parameter enables device 115 to send an on/off command to light device 111. Third and fourth parameters enable the devices to react to the on/off commands. During configuration (i.e., prior to operation), configuration device 118 interacts with configuration user 152 through the user interface (cf. FIG. 6) that applies graphics, drag/drop, symbols etc. For the configuration user, the configuration settings to send and to receive commands are not visible.
INTERRELATION: As explained above, particular application domains (e.g., HVAC, LIGHT, CONTROL), particular device types (depending on the manufacturers of the devices), particular communication parameters etc. required different operation signals {S} and difference configuration settings {C}. Processing the data-structures (in configuration device 118) comprises the selection of appropriate mappings. The presences of devices in the HVAC domain (device 112) and the CONTROL domain (device 115) can lead to the selection that mapping has to be performed between L1 and L2 in general, and between X and A (or B) in particular. In the example of FIG. 1, mapping is required for LIGHT and CONTROL ({S}, between X and A, B, but an intra-level mapping between A and B is not required.

In other words, there are many parameters to be taken into account, and parameters might be conflicting. Parameters that are incorrectly configured (e.g., causing two device using different frequency band) prevent the technical system to operate as desired.

### Fictitious protocols A, B and X

The description uses fictitious communication conventions with three layers (physical layer, media access layer, and status/control layer) but - for simplicity - investigates parameters in the status/control layer only. In the status/control layer, the operation signals {S} may be in different. It is noted that configuration settings {C} can relate to the physical layer and to the media access layer as well, although there is no mapping required. It may be advantageous that mapping in general during configuration, and mapping in particular by converter device 116 during operation can be limited to mapping of {S}. It will be shown that configuration device 118 processes the parameters (in the digital layer) in a particular way. Persons of skill in the art can apply the teachings herein to all type of parameters (such as the communication parameters (c1) to (c7), to the standards etc.).

In the example, the physical layer should be applicable for bus 117 and for the lines to/from bus 117 by the convention to use twisted-pair wires. The media access layer should be defined by each device having a unique physical address. The status/control layer should be defined by data packages that allow the transmission of alphanumeric characters (A, B, C ... Z; 0, 1 ... 9). The person of skill in the art understands that some BA devices can allow modifying such parameters through configuration. For example, a particular device may either use wire or use radio, and the selection can be communication to the device through communication settings {C}. For simplicity of explanation, such cases are not discussed here.

A used here in the example of FIG. 1, the BA devices communicate according to communication conventions that differentiate on the digital signal layer only. Fictitious protocols A, B and X belong to level L2. (A non-fictitious example would be light actuator device 111 in KNX, HVAC device 112 in BACnet, user interface device 115 in OPC UA). In the example, command data to switch a device on (i.e. to activate it) has different syntax: SWITCH ON (in protocol A) and ACTIVATE (in protocol B). A BA device operating according to protocol A (as light actuator device 111) would not react properly if it receives ACTIVATE. This is even dangerous in terms of product safety, because ACTIVATE might have a different semantic. Commands to switch a device off should read as: SWITCH OFF (in protocol A) and DEACTIVATE (in protocol B).

In terms of {C} and {S}, data by that the configuration device enables a BA device to properly react to SWITCH ON/OFF or ACTIVATE/DEACTIVATE commands, (or data by that the configuration devices enables a BA device such as user interface device 115 in FIG. 1 to properly provide a data package) belongs to {C}. Data that - during operation - actually lets a receiving BA device go on (or off), belongs to {S}.

Fictitious protocol X (for operation signals) is a protocol in the second level L2. Assuming that device 116 is used, device 115 would send a CONTROL ON LIGHT command to device 116 (protocol X), device 116 would map this command to SWITCH ON LIGHT and send the modified command to device 111 (protocol A). The principle is applicable for device 112 (protocol B, ACTIVATE HVAC).

### Mapping

FIG. 3 illustrates an overview to mappings that are applied by configuration device 118 and - optionally - by converter device 116. FIG. 3 is a matrix with levels L1, L2 and L3 (in rows), and with data categories {C}, {S} and {M} (in columns). The rows and columns are divided by dashed lines. Arrows with bold lines indicate mappings. Mappings are uni-directional (L3 to L1; L1 to L2). Mappings are available within the data categories.

As discussed herein, data is categorized according to purposes:
- Configuration settings {C} configure the BA devices.
- Operation signals {S} communicate technical parameters between the BA devices during operation.
- Object-oriented methods (and properties) {M} are performed as data operations by the memory/processor units in the BA devices. {M} can be performed during configuration (phase 203, processing {C}) and during operation (phase 204, sending or receiving {S}).

As used herein, the vector symbol { } indicates that settings, signals and (object-oriented) methods can be composed of multiple parameters, components, sub-pluralities and other divisions.

Traditionally, the configuration settings {C} and the operation signals {S} are specific to pre-defined communication conventions (e.g., conventions defined in technical standards) that are used by the BA devices in their inter-device communication. Technical systems with multiple BA devices can use different conventions. {C} and {S} can be specific to the building-related function of the BA devices.

Device specific differences apply to {M} as well. The processor/memory units of the BA devices support the components (of the BA device) to perform the functions (building-related, communication). The memory can store object-oriented methods (and properties) and the processor can execute them. Object oriented methods that support the communication function of the BA devices (and the building-related function) can be different as well.

Simplified, {C} from the configuration device prepare {M} during configuration (by enabling object-oriented methods to be performed), and the execution of {M} lets the BA devices perform the building related function, and let the BA devices communicate with each other through {S} during operation.

While {C}, {S} and {M} stand for data that is being communicated to and from the BA devices and processed by the BA devices, metadata can be used as descriptors for the conventions on how {C}, {S} and {M} is to defined, to be communicated and to be processed. In principle, metadata can describe the conventions of {C}, {S} and of {M}. The description takes metadata for {S} as an example.

Configuration device 118 and converter device 116 use the data (i.e., {C}, {S} and {M}) in different abstraction levels. The first level (L1) is based on technology agnostic communication conventions and describes the communication level. The second level (L2) is based on technology specific communication conventions. Data in a third level (L3) contains technical descriptors for {C}, {S} and {M} (of the first and second levels) in terms of meaning (i.e. semantic). Since - as explained above - communication and building-related functions are inherently related with each other, L3 is related to both the communication function and to the communication function. L3 relates {C}, {S} and {M} in the communication levels L1, L2 to the building-related functions. Using data in different levels (in combination with the mappings) can be advantageous.

### Communication level mapping

Inter-level mappings are provided between the communication levels L1 and L2, according to mapping rules. Mapping is available for the configuration settings {C}, for the operation signals {S} and for the object-oriented methods {M}. Some of the mapping rules are applicable for {C} only, for {S} only, for {M} only, some of the mapping rules are available for {C} and {S}, for {S} and {M}, for {C} and {M}, as well as for {C}, {S} and {M}.

The first level L1 can be considered to be more "abstract" than the second level L2. Mapping can be "down-mapping" from the first level L1 to the second level L2, and - optionally - mapping can be an "up-mapping" from the second level L2 to the first level L1. Intra-level mapping (within in the second level L2) is also possible.

In considering the communication levels, there are configuration settings {C} in the first level L1, and configuration settings {C} in the second level L2. There are operation signals {S} in the first level L1, and operation signals {S} in the second level L2. As indicated by the vertical arrows, configuration device 118 performs (level) mapping during configuration, from {C} L1 to {C} L2 (and optionally, vice versa). Converter device 116 performs mapping during operation within {S} L2. Mapping {M} can be performed by both: configuration device 118 and converter device 116. The mapping rules are applicable for both.

An example is given for {S} in connection with fictitious protocols A, B and X. A data package conveying CONTROL ON (in protocol X, level L2) would have to be converted to SWITCH ON for BA devices in protocol A (level L2) and to ACTIVATE for BA devices in protocol B (level L2). The person of skill in the art can apply this principle of conventions in {S} and {M} (not necessarily "protocols") likewise.

The technical system (cf. FIG. 1) is partly a homogeneous system in the sense to have BA devices that have been configured according to a single level (e.g., L1, such as for communication via protocol X), but the technical system is partly a heterogeneous system in the sense to have BA devices configured according to L1 and L2 (e.g., with devices operating according to A or B).

### Function-to-communication mapping

In FIG. 3, the uni-directional arrows indicate the mapping from functional descriptions in L3 to the communication levels. It may be advantageous to have mappings in one direction only (Modifications in the devices do not influence the functional descriptors).

There are data descriptors (in L3) adapted for technology-nonspecific (agnostic) protocols (such as protocol X, symbolize by the arrows), and there can be data descriptors (in L3) adapted for technology-specific protocols (such as protocols A or B).

Configuration device 118 comprises (at least one) processor and comprises memory. In principle, this is similar to the processor/memory units of the BA devices. A (first) computer program loaded into memory is being executed by the processor so that the configuration device performs the steps of the configuration method. The same principle is applicable for the optional converter device as well: The converter device comprises (at least one) processor and comprises memory as well. Optionally, a (second) computer program loaded into memory is being executed by the processor so that the converter device performs the steps of the data-conversion method.

Configuration device 118 and converter device 116 have conversion (or mapping) in common. Configuration device 118 converts parameters (during configuration) while the BA devices are not yet being operated. Converter device 116 converts signals {S} while the BA devices are being operated as part of the technical system. Communication parameters and signals are interrelated. The communication parameters determine how the BA devices (including the converter device) process signals: how they identify signals, generate signals, send signals, receive signals, interpret signals etc.

Conversion is performed according to rules, including the mapping rules (as explained above). There is synergy in that some of the rules that are applicable for the configuration device are also applicable for the converter device. Also, configuration device 118 forwards at least some of its rules to converter device 116 (i.e., during the configuration of the converter device, as {C}).

Configuration device 118 receives device data, data that is specific for the devices in the building, and obtains descriptors for the technical system. As the result of the configuration method, the communication device forwards communication settings to the memory units of the BA devices. Having such a configuration completed, the technical system with the plurality of BA devices in the building is ready for use.

During configuration, configuration device 118 can interact with configuration user 152 through a user interface (i.e. a human machine interface HMI). Thereby, configuration device 118 enables views to configuration settings {C}, operation signals {S} and object-oriented methods {M} of the BA devices. But the interface can hide complexity by representing signals, settings, and even devices etc. in the first level L1 (i.e. the level that is agnostic to the technology of the BA device). Configuration device 118 performs mappings that describe relations between elements on the user interface (that represent BA devices) and settings {C}, signals {S} and object-oriented methods {M} to/from the levels L1, L2 and L3.

The approach comprises to process device descriptors with parameters in different levels (i.e. device model level L1, communication level L2, semantic model level L3, with inter-level mapping), and to differentiate the configuration settings {C} (and the operation signals {S} as well) within these levels. Inter-level mapping is available (at least) during configuration and - optionally - during operation. The HMI hides device-specific differences from the user at least partially in L2 and more completely in L3.

As used herein, data aspects (or "models") are symbolized by uppercase letters, such as FUNCTION (e.g. to define the interaction of BA devices), PROTOCOL (e.g., to define device specific communication parameters). For the configuration user, some of these aspects are separated in separate user interface elements. For example, there can be user interaction (of the configuration user) to identify FUNCTION, and to identify PROTOCOL. Such a separation (with subsequent unification to configuration settings) may be advantageous.

### Operation of the configuration device, for the example

FIG. 4 and FIG. 5 illustrate configuration device 118 with more detail. FIG. 4 illustrates configuration device 118 with its components. FIG. 5 illustrates a user interface component of the configuration device 118 on the left side, and illustrates a mapping as the result of processing on the right side. As illustrated by FIG. 5, configuration device 118 can be implemented with a touch-screen that uses symbols (or pictograms).

Configuration device 118 can be implemented by computer software for a general purpose computer. Configuration user 152 (cf. FIG. 1 and FIG. 4) can carry configuration device 118 into the building, connect configuration device 118 to bus 117 (cf. FIG. 1) and start using it. It is also contemplated to let configuration device 118 interact with the BA devices remotely. For example, configuration user 152 could be sitting in an office. However, being physically present inside the building allows the configuration user to test the configuration settings by testing the BA devices (and/or diagnosing them). In the example (of FIG. 5), configuration device 118 is a tablet computer with an interactive touch screen.

As mentioned, it is also possible to separate configuration device 118 into two units. A processing unit 118-1 receives and processes and provides the configuration settings {C}, and transmitting unit 118-2 transmits the settings to the BA devices (cf. FIG. 1). There can be two configuration users, one in an office, and the other one in building 101. However, the distribution of such functionality is not relevant here.

As illustrated by FIG. 4, during the configuration phase (third phase 203), configuration device 118 receives first data-structure 301 with functional descriptors of the building. Data-structure 301 comprises at least the specification of the inter-device communication that is part of overall function of the system. In the example, device 118 receives data-structure 301 in interaction with configuration user 152. This is illustrated in FIG. 5 by reference 301-GRAPH where the configuration user 152 drags and drops symbols (on the screen). The symbols are selected according to the building-related function of the BA devices: standing for a control device (i.e., user interface device 115) with ON/OFF control elements, for a light actuator device and for an HVAC device. User 152 has added arrows indicating the inter-device communication as CONTROL signals (from device 115 to devices 111/112, pairs 115/111, and 115/112). While the configuration user 152 provides this function, data-structure 301 can also be maintained in device 118 by a textual representation 301-TEXT (right side in FIG. 5). The textual representation uses conventions of the first level L1 (here in protocol X). Configuration device 118 also receives second data-structure 302 ("device data") with configurable technical parameters of the BA devices. The technical parameters comprise communication parameters (e.g. indication of protocols A, B) of the building automation devices (111, 112, 115, 116) that specify how the devices perform the inter-device communication during operation in form of data-packages (119).

Configuration device 118 processes both data-structures 301 and 302 in combination. During processing, configuration device 118 performs a configuration-time mapping (as explained in FIG. 3). Configuration device 118 provides configuration settings 300 {C} and forwards {C} to the BA devices that participate in performing the (building-related) functions. In FIG. 4, the settings are numbered from #1 to #8, with details in the description further below.

The functional descriptors (or "FUNCTION") is part of data-structure 301 and describes the relations between the BA devices at the functional level. In data-structure 301, the relations are described for the operation phase (204 in FIG. 2). For example, user interface 115 sends commands to devices 111 and 112 to let them operate (or not). This corresponds to the first usage scenario. In other words, there is a function (e.g., sending command data) with a particular result (e.g., a device starts or stop operating) and with an indication of the function of the devices (e.g., controlling, providing light, conditioning the air).

In graphical representations on the screen of configuration device 118 (illustrated on the left side of FIG. 5), the functional descriptors are symbolic. For example, the BA devices can be represented by symbols such as rectangles (building-related function), and relations between the devices can be represented by arrows (communication function). The configuration user can relate the symbols by moving them on the screen, by adding the arrows and so on. Configuration user 152 does not have to look at communication details. In other words, configuration user 152 interacts with the symbols to arrive at the functional descriptors. The representations correspond to level L3.

In textual representations (of data-structure 301, illustrated on the right side of FIG. 5, 301-TEXT), the functional descriptors could be a data-structure with a combination of text elements such as: FUNCTION = "CONTROLLER to (ON/OFF LIGHT, ON/OFF HVAC)". Such a textual representation partly corresponds to the first level L1.

The textual representation of the functional descriptors (in data-structure 301) can be hidden from the configuration user. In the example, the functional descriptors are much simplified to commands that can switch the status of BA devices (during operation). In the example, there are 4 different commands possible: ON LIGHT, OFF LIGHT, ON HVAC, OFF HVAC. ON/OFF switch the operation state of a BA device; and LIGHT/HVAC identify the BA device by its building-related function.

Technology to obtain a textual representation from a graphical representation is known to the person of skill in the art. Instead of textual representations, the functional descriptors can be represented otherwise. Optionally, the functional descriptors can be enhanced by a tool that verifies functional consistency according to some rules. Such a tool can be part of configuration device 118. For example, in the text elements, a phrase "CONTROLLER to" would be identified as incomplete (because the to-be-controlled device type is missing). For example, in the graphic, a non-pointing arrow would lead to the same observation.

Communication descriptors COMMUNICATION refer to the communication between the devices. In the example above, the communication descriptors refers to protocols A or B, or more particular, indicates whether a device operates under KNX, BACnet etc. or other standards. Graphically, the descriptors can be presented to the configuration user by symbols (such as logos, or drop-down lists). It is noted that the communication convention for the BA devices is known prior to the configuration phase (cf. device data 302), configuration device 118 can obtain the descriptors automatically.

The descriptors of a device - being an universal device description - usually comprises functional descriptors (here, for the building-related function, as explained in the example, at least for the devices, not necessarily for the implementation of the device into the technical system), and descriptors for the communication.

Configuration device 118 uses mapping function 306 (in FIG. 4) to map the functional descriptors from its protocol-agnostic form (L1) to a protocol-relevant form (L2), in other words by mapping operation signals {S}L1 (the first level) to operation signals {S}L2 (second level). Using device data 302 (cf. FIG. 4), mapping function 306 (cf. FIG. 4) provides a mapping, for the light device in protocol A (the commands would be SWITCH ON LIGHT and SWITCH OFF LIGHT), and for the HVAC device in protocol B (the commands would be ACTIVATE HVAC, DEACTIVATE HVAC).

Mapping function 306 provides the commands as part of configuration data {C}, in the example for user interface device 115 (cf. FIG. 1). Once configured, device 115 interacts with user 151 and sends commands (via data package 119) to device 111 with SWITCH ON LIGHT (or OFF, as the case may be), and device 115 sends commands to device 112 with ACTIVATE (or DEACTIVATE).

More in general, as a result of performing the configuration method, configuration device 118 provides configuration settings {C} and communicates these configuration settings to the BA devices 111, 112, 115 and 116. Generally, there are different settings for different parameters devices. BA devices 111, 112, 115 and 116 store these configuration settings. Once the configuration parameters are stored (setting completed), the technical system 102 is available for operation (in the next phase, cf. FIG. 2).

The description again refers to the above-mentioned simplified scenario (switch light on/off and witch HVAC on/off) and investigates how configuration device 118 provides the configuration parameters. The configuration parameters are now explained by the result (i.e. by explaining the parameters that are to be stored by the BA devices. {C} is a vector with different configuration elements.

In the example, converter device 116 is assumed to be part of the system (for converting operation signals {S} (L2, A<-->B, A<-->X, B<-->X). It is further assumed that user interface device 115 is a device using protocol X.

Configuration device 118 transmits the following configuration settings {C} to device 115 (and device applies them):
- Setting #1: Devices 111, 112, 116 send/receive data packages at a particular address. This is a communication parameter that relates to access levels, and that therefor does not belong to the protocols X, B or A. For simplicity, this parameter is not further discussed.
- Setting #2: Device 111 is a device with the function of a light actuator, communicating under protocol A via device 116. In applying this element, device 115 is prepared to address data packages 119 not to the IP-address of device 111, but to the IP-address of device 116, with the convention that device 116 forwards the package.
- Setting #3: Device 111 is associated with symbols on a touch screen of user interface device 115 so that building user 151 can identify device settings (such as "on" = "light", "off" = "dark"). These configuration settings relate to data binding, the symbols on the screen correspond to command that device 115 send through data packages. HVAC device 112 has to be identified as an HVAC device. The semantic that device 112 adapts temperature and humidity can be pre-defined for HVAC devices, but can also be communicated by separate parameters (i.e., sub-types with sub-functions).
- Setting #4: Device 111 operates under protocol B and communicates via device 116 (with IP-address conventions to be applied likewise).
- Setting #5: Device 112 is associated with symbols on a touch screen of user interface 115 so that building user 151 can selectively switch HVAC device 112 "on" or "off".
- Setting #6: Device 116 is a device with the mapping function with an X-to-A and X-to-B protocol converter. Such a protocol conversion is a real-time conversion during operation of the technical system. This configuration element can comprise the details for the mapping, for example, mapping function 306 illustrated in FIG. 5.

Also, during configuration phase 203, configuration device 118 transmits configuration settings {C} to BA devices 111 (light actuator), 112 (HVAC) and 116 (converter), such as the following #7: The data packages (119 in FIG. 1) need to be addressed to the particular address of user interface 115. (This relates to data packages that communicate STATUS back to device 115.)

During the configuration phase, configuration device 118 transmits the following configuration settings to HVAC device 112, #8: The default value for the temperature is 21 °C and the default value for the humidity is 50 per cent. This parameter is for the first usage scenario, that allows "on" or "off" only. Having been configured in such a way, device 112 operates accordingly to either keep the temperature at 21 °C, or not. This parameter is an example for a parameter that relates to the building-related function of device 112.

Having configured the BA devices with this minimum set of configuration settings, the technical system is able to operate.

During the operation phase, building user 151 interacts with device 115 and device 115 receives the instruction to switch the light on (e.g. via the mentioned touch screen symbol). Device 115 sends the data package with the following commands to converter device 116: CONTROL ON LIGHT. It will map the command to SWITCH ON LIGHT (X to A, L1 to L2) and forward the command (in a new data package) to device 111. Device 111 will then start to provide light (or to continue to provide light). Switching off is performed accordingly.

Also during the operation phase, building user 151 interacts with device 115 and device 115 receives the instruction to start/stop conditioning the air (e.g. via the touch screen symbol as well.). Device 115 sends data packages with the following commands to device 116: CONTROL ON HVAC, CONTROL OFF HVAC. Device 116 performs the X-to-B conversion and forwards a modified package with start or stop to device 112, ACTIVATE, DEACTIVATE.

In this example, BA device 116 acts as a protocol converter (using a sub-set of mapping function 306 of configuration device 118). Device 116 has received the protocol conversion details (i.e. the mapping) during configuration.

This example can be modified. For example, instead of protocol X, device 115 could use protocol A, so that device 116 would perform an A-to-B mapping (for signals to device 112 only). In the second usage scenario, the requirements for configuration (and for operation) are much more complex. For example, device 111 (under protocol A) periodically (e.g., pre-set interval every minute, but the interval can be a parameter as well) sends a data package via bus 117 (physical layer), from the particular address of device 111 to a particular address of user interface 115 (i.e. media access layer) with the following alphanumeric characters (status/control layer, protocol A): ACTUAL_STATUS = ON. Similar status data can be collected from device 112 (actual temperature and humidity measurement).

Even the advanced scenario can be implemented by different devices, so that the complexity (at least during configuration) is further increasing. Devices with multiple functions can receive signals that trigger a change for a particular operating mode. In the example of a combined light actor/sensor device, there is a first signal for the light and a second signal for the sensor.

During operation, devices can receive signals that modify one or more parameter of a function. For example, the air-conditioning device for a room can have the first function to keep the temperature in the room within particular borders (e.g., 20 °C, within a predefined tolerance), and can have the second function to keep the humidity in the room within particular borders (e.g., 70-80 percent). A first signal sets a desired temperature (e.g., to 22°C) and the second signal sets a desired temperature (e.g., to 50 percent). To let the device operate (fourth phase) correctly, the parameters (here the temperature and humidity settings) must be configured.

FIG. 6 illustrates a flow-chart diagram for a configuration method to operate configuration device 118. Computer-implemented method 203 for configuring a plurality of BA devices (technical system 102 in building 101 to perform building-related functions) is performed prior to operation (cf. phase 204) of technical system 102.

In a receiving step 203-01, device 118 receives first data-structure 301 and a second data-structure 302. Data-structure 301 represents the function of technical system 102 during future operation (i.e. following configuration) by specifying inter-device communication between pairs of BA devices (as explained wit sender and receiver devices). Data-structure 302 specifies the inter-device communication by the operation signals at first level L1 being device agnostic. Data-structure 302 represents configurable technical parameters of the BA devices, with communication parameters (such as protocols A, B of the BA devices) that specify how the devices perform the inter-device communication during operation in form of data-packages 119. The operation signals are at second level L2 being device specific.

In a processing step 203-02, device 118 processes data-structures 301 and 302 by mapping L1/L2 the operation signals at first level L1 to operation signals at second level L2, A, B depending on the technical parameters of the sender and receiver devices, and by determining configuration settings {C} that adapt communication parameters that are required for sending and for receiving data-packages 119 by the BA devices during the operation, in the operation signals at the second level L2, A, B.

In a transmitting step 203-03, device 118 transmits configuration settings {C} to the pairs of the BA devices. The BA devices apply (step 203-04) the configuration settings {C} as software settings to memory units of the BA devices to enable at least a sub-set of the BA devices to send and receive the operation signals at second level L2.

FIG. 7 illustrates a flow-chart diagram for a data-conversion method 204 to operate the technical system to perform the building-related functions within the building. Method 204 is being computer-implemented by converter device 116 (having a processor/memory unit). Converter device 116 receives (step 204-01) a mapping (L1/L2) for operation signals ({S}) applicable to the processor/memory units of the BA devices (111, 112, 115, 116). The mapping corresponds to the mapping (L1/L2) of the operation signals ({S}) that was obtained by the processing step (203-02). Converter device 116 receives (step 204-02) operation signals {S} from a first BA device acting as a sender device (e.g., device 115), converts (step 204-03) the operation signals {S} according to the mapping (L1/L2); and sends (204-04) the converted operation signal ({S}) to a second BA device acting as a receiver device (e.g., 111, 112).

FIGS. 6-7 also illustrate computer programs or computer program products. A computer program product - when loaded into a memory of a computer and being executed by at least one processor of the computer - performs the steps of the computer-implemented method. So in other words, the blocks in FIGS. 7-8 illustrate that the method can be implemented by computers: configuration device 118 (configuration method) and converter device 116 (conversion method).

### Further consideration

In the BA devices, a computer (with processor, memory, input/output (I/O) interface etc.) interacts with hardware that implements the building-related function. For example, in device 111 (the light actuator device), the processor is coupled to a first part of the I/O interface to receive {C} (during configuration 203), and {S} (during operation 204) and to a second part of the I/O interface to control the mentioned electronic circuitry and the LED. Much simplified (to focus on the first usage scenario), the I/O provides a binary flag to a semiconductor device that lets electrical current flow through the LED or that interrupts the current. In a further example, in user interface device 115, the processor/memory unit receives {C} and/or sends/receives {S}{M} as explained, and the processor communicates with user interface hardware. The UI hardware can be the touch screen unit (mentioned above), a gesture recognition unit, an acoustical unit (i.e. microphone with speech recognizer) etc.

The processor/memory unis of the BA devices store computer instructions ("device software"). The processor executes instructions, among them methods, routines, modules, etc. Some of the instructions can be in hierarchies, such as in groups. The instructions comprise the operating systems (frequently called "firmware") and methods, such as the object-oriented methods {M}. The firmware is usually communicated to the memory by the manufacturer of the devices, at a point in time that pre-dates the configuration phase. {M] can be communicated to the memory during configuration, or can be adapted (by setting variables) during configuration.

As used herein, the firmware is able to process {C} and to derive the methods (during configuration). In the operation phase, the BA devices uses device software (i.e. the firmware and the methods) to receive/send {S} and to perform the building-related function.

For example, device 111 executes a method (1) that is configured to understand the SWITCH ON/OFF LIGHT commands and that interacts with the circuitry to perform the following function: provide light according to command {S} SWITCH ON/OFF LIGHT, in protocol A.

For example, device 115 executes a method (2) that is configured to perform the following function: interact with the building user to provide {S} CONTROL ON/OFF LIGHT, in protocol X (and send {S} to the device 116). Method (2) implements a human machine interface (HMI) definition. Method (2) comprises code for guiding the user (i.e. the building user), for interacting dialogs to receive an input, to provide feedback, to ask for user confirmation etc.

The description is simplified, user interface device 115 actually executes a plurality of methods, because the control functionality described above requires more functions to be performed.

For simplicity of explanation, the description concentrates on how the devices perform methods (1) and (2). However, there are further constraints, in at least two constraint groups:
(group 1) In phase 201, particular devices can be selected from devices made by different manufacturers (e.g., manufacturer "alpha" or "beta", prior to installing 202). In phase 202, the selected devices can be installed with particular settings, cf. the parameters c1 to c7 etc. For example, device 111 may communicate by wire or by radio. Simplified, for a particular device in the function of device 111 the following combinations can apply: alpha-wire, alpha-radio, beta-wire, or beta-radio. As a consequence, method (1) may have a different syntax (e.g., "method_light" in case of alpha, "routine_LED" in case of beta, and different variables (for wire and radio). (Other manufacturers may even reduce method (1) to a method that sets a single bit in the I/O interface (e.g., "SetLight = 1" vs. "SetLight = 0".).
   For simplicity of explanation, the particular device in the function of device 115 should be a device from one particular manufacturer, communicating by wire only. Such (and other) particulars are not to be differentiated by the configuration user.
(group 2). Devices may implement the function differently. This will be explained for the particular device 115. For all interaction patterns (touch, gesture, acoustical) the device should provide the mentioned CONTROL ON/OFF LIGHT command. Again the particulars are not to be differentiated by the configuration user. It is even not defined when the interaction pattern is selected. There might be a pre-selection during installation 202 or not. There might be even a pattern co-existence during operation. As a consequence, method (2) would need to be configured. It is noted that the HMI can depend on the interaction pattern (e.g., asking for user confirmation for the acoustical pattern only "you really like to switch the light off?").

But the constraints should not prevent or disturb device selections (or replacement during operation). The approach uses L3/L1 as further mapping (a semantic-to-device mapping). This mapping is a unidirectional mapping from the device function to device properties. For example, the above explained function "provide light according to command {S} SWITCH ON/OFF LIGHT, in protocol A." results in the following method calls:

| (device) | (method call) |
|---|---|
| alpha-wire device: | method_light (LAN, ..., ...) |
| alpha-radio device: | method_light (868-868.6 MHz, ..., ...) |
| beta-wire device: | routine_LED (..., LAN, ...) |
| beta-radio device: | routine_LED (..., 868-868.6 MHz, ...) |

The unidirectional approach has an advantage: changes in the particular device are not relevant to the device function ("semantic"). Configuration device 118 (i.e. the processing unit 118-1) having received the device function (cf. structure 301, here the function of the device) and having received device data 302 with the device properties (here: alpha/beta, wire/radio) can identify the suitable method call.

In the following, the description explains the location of data-structures 301, 302 and the access of configuration device 118 to the BA devices during configuration phase 203, during operation phase 204 and during re-installation phase 205.

The module "Device Definition" represents the function of the devices, in terms of building-related function and communication function. This module can be available in data-structure 302 (cf. device-data) and accessible to configuration device 118 (at least during configuration). The module also provides properties that are applicable for the particular manufacturers of the devices. For example, there are two devices defined:
The first device has the building-related function to provide light according to command {S} SWITCH ON/OFF LIGHT and has the communication function according to protocol A1. The manufacturer is "alpha", and a HMI (here, a human machine interface of the BA device) is not applicable.

The second device has the building-related function provide light according to command {S} SWITCH ON/OFF LIGHT, and has the communication function according to protocol A2. (A2 being similar to A1, but not fully compatible) The manufacturer is "beta" (that has introduced A2 as a variation to A1). An HMI is not applicable as well.

The third device has the building-related function to interact with the building user to provide {S} CONTROL ON/OFF LIGHT, and has the communication function according to protocol X. The manufacturer should be "gamma". There are different HMI patterns available, for the building user to interact by (hand or body) gestures or by using a touch-screen.

The fourth device is a proximity sensor with a window contact with the building-related function to provide a STATUS (window open, or window closed). The communication function uses Zigbee, and an HMI is "n/a".

The fifth device has the building-related function HVAC, with the communication function implemented by the BACnet protocol, without HMI.

The module "Semantic Model Definition" (SMS) provides the functional representations of the functions of the devices, in terms of building-related functions and communication function etc. This is available in data-structure 302 (cf. device-data) and accessible to the configuration device (at least during configuration), but the definition concentrates on the function, such as to provide light according to command {S} SWITCH ON/OFF LIGHT (being the building-related function, first and second devices in the example). The SMS points to the "device definition", but not vice versa.

The module "Communication Model Definition" represents the communication function of the devices, for example, given by an indication of the communication protocol (A, B or X), by an indication of a particular standard. The "communication model definition" points to the "device definition", but not vice versa. The entry in data-structure 302 for device 111 is the following: first device: protocol A1, second device: protocol A2. In case that the first device has to be replaced by the second device, the modifications in the settings are minimal, potentially only in the converter settings (L1/L2, X to A2, no longer to A1). The third device would still work with its original configurations. Lifecycle handling is simplified.

The same principle is applicable for a module "HMI Definition", there is a mapping outgoing from the HMI definition (e.g., CONTROL ON/OFF LIGHT), but - in the example of third device - the selection between gesture and touch-screen would not change the signal {S} that is provided by the third device. Flexibility is enhanced: switching from gesture to touch-screen can be accomplished by minimal changes in the settings.

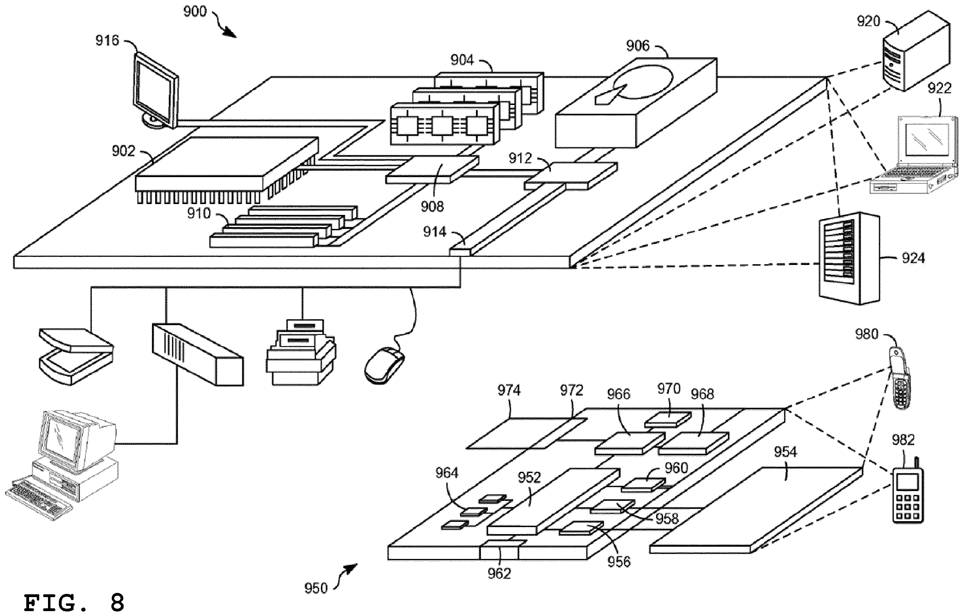

FIG. 8 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers.

Generic computing device 900 may correspond to the computer system explained above. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952 that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the scope of the invention. In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

## Claims

1. Computer-implemented method (203) for configuring a plurality of building automation devices (111, 112, 115, 116) that are installed as a technical system (102) in a building (101) to perform building-related functions, the method (203) being performed prior to operation (204) of the technical system (102), the method (203) comprising:
receiving (203-01) a first data-structure (301) and a second data-structure (302),
• with the first data-structure (301) representing the function of the technical system (102) during future operation by specifying inter-device communication between pairs (115/111, 115/112) of building automation devices (111, 112, 115, 116), the first data-structure (301) specifying the inter-device communication by operation signals at a first level (L1) being device agnostic;
• with the second data-structure (302) representing configurable technical parameters of the building automation devices (111, 112, 115, 116), the technical parameters comprising communication parameters (A, B) of the building automation devices (111, 112, 115, 116) that specify how the devices perform the inter-device communication during operation in form of data-packages (119), with the operation signals being at a second level (L2) being device specific;
processing (203-02) the first data-structure (301) and the second data-structure (302)
• by mapping (L1/L2) the operation signals at the first level (L1) to the operation signals at the second level (L2, A, B, X) depending on the technical parameters of the sender device (115) and of the receiver device (111, 112), and
• by determining configuration settings ({C}) that adapt communication parameters that are required for sending and for receiving the data-packages (119) by the building automation devices (111, 112, 115, 116) in the operation signals at the second level (L2, A, B, X);
transmitting (203-03) the configuration settings ({C}) to the pairs (115/111, 115/112) of the building automation devices (111, 112, 115, 116); and
applying (203-04) the configuration settings ({C}) as software settings to memory units of the building automation devices (111, 112, 115, 116) to enable at least a sub-set of the building automation devices (111, 112, 115, 116) to send and receive the operation signals at the second level (L2).

2. The method of claim 1, wherein transmitting (203-03) is performed by a configuration device (118) that is communicatively coupled to the building automation devices (111, 112, 115, 116) in at least one communication direction.

3. The method of claim 2, wherein receiving (203-01) and processing (203-02) is performed by a processing unit (118-1) that is an integral part of the configuration device (118), and that is adapted to perform receiving and processing by interacting with a configuration user (152) through a user interface, and wherein the first data-structure (301) representing the function of the technical system (102) during future operation (204) is received through that interaction with the configuration user (152).

4. The method (203) according to any of claims 1 to 3, wherein the steps receiving, processing, transmitting and applying are performed to obtain configuration settings for a particular building automation device (116) that - during the future operation (204) of the technical system (102) - acts as a converter device (116) wherein the converter device receives operation signals in the first level ({S}L1) and that sends operation signals in the second level ({S}L2), and vice versa, between devices in pairs (115/111, 115/112).

5. The method (203) according to claim 4, wherein the converter device (116) uses a mapping (L1/L2) that corresponds at least partly to the mapping during processing (203-02) the first data-structure (301) and the second data-structure (302).

6. The method (203) according to any of claims 1 to 5, wherein the configuration settings ({C}) are being transmitted (203-03) and applied (203-04) to pairs of building automation devices (115/112, 115/111) such that during operation (204), the sender device (115) causes the receiving building automation device (111, 112) to change the status and to perform its building-related function differently, and/or the sender device transmit status information to the receiver device.

7. The method (203) according to any of claims 1 to 6, wherein the configuration settings ({C}) are being sent (203-03) and applied (203-04) to the building automation devices (111, 112, 115, 116) such that the building automation devices change the operation parameters of their building-related function within minimal and maximal settings.

8. The method (203) according to any of claims 1 to 7, wherein the configuration settings ({C}) enable a further subset of the building automation devices (115, 116) to send and receive the operation signals ({S}L1) in the first level.

9. The method (203) according to claim 8, wherein the configuration settings ({C}) enable the first subset of the of the building automation devices (115, 116) to send and receive the operation signals ({S}L2) in the second, device-specify level, being selected from the group of KNX, BACnet, Zigbee, free@home, Z-Wave, OpenAdr, MQTT, Modbus, and LonWorks.

10. The method (203) according to any of the preceding claims, wherein receiving (203-01) the first data-structure (301) and the second data-structure (302) comprises to receive a function-to-communication mapping (L3, L1), with relations between the building-related functions of the building automation devices to the communication function of the building automation devices.

11. Computer-implemented method (204) for operating a technical system (102) with a plurality of building automation devices (111, 112, 115, 116) that are installed in a building (101) to perform building-related functions, the method (204) comprising:
receiving (204-01) a mapping (L2, A, B, X) for operation signals ({S}) applicable to processor/memory units of the building automation devices (111, 112, 115, 116), wherein the mapping corresponds to the mapping (L2, A, B, X) of operation signals ({S}) obtained by the processing step (203-02) of the method according to any of claims 1-10;
receiving (204-02) operation signals ({S}) from first building automation device acting as a sender device (115);
converting (204-03) the operation signals ({S}) according to the mapping; and
sending (204-04) the converted operation signal ({S}) to second building automation device acting as a receiver device (111, 112).

12. A computer program product - when loaded into a memory of a computer and being executed by at least one processor of the computer - performs the steps of the computer-implemented method (203) for configuring a plurality of building automation devices according to any of claims 1-10.

13. A computer program product - when loaded into a memory of a computer and being executed by at least one processor of the computer - performs the steps of the computer-implemented method (204) for operating a technical system (102) in a building (101) according to claim 11.

14. A computer device (118) with processor and memory for configuring a plurality of building automation devices (111, 112, 115, 116) that are installed as a technical system (102) in a building (101), the computer device (118) being adapted to perform a method (203) for configuring the building automation devices according to any of claims 1-10.

15. A computer device (116) adapted to be installed to a technical system (102) with a plurality of building automation devices (111, 112, 115, 116) that are installed in a building (101) to perform building-related functions, wherein the computer device (116) is one of the building automation devices, the converter device (116) **characterized in** by being adapted to perform the computer-implemented method (204) according to claim 11.

## Patentansprüche

1. Computer-implementiertes Verfahren (203) zur Konfiguration einer Vielzahl von Gebäudeautomationsvorrichtungen (111, 112, 115, 116), die als technisches System (102) in einem Gebäude (101) installiert sind, um auf das Gebäude bezogene Funktionen vorzunehmen, wobei das Verfahren (203) vor dem Betrieb (204) des technischen Systems (102) vorgenommen wird, wobei das Verfahren (203) umfasst:
Empfangen (203-01) einer ersten Datenstruktur (301) und einer zweiten Datenstruktur (302),
- wobei die erste Datenstruktur (301) die Funktion des technischen Systems (102) während eines zukünftigen Betriebs durch Spezifizieren der Inter-Vorrichtungskommunikation zwischen Paaren (115/111, 115/112) von Gebäudeautomationsvorrichtungen (111, 112, 115, 116) darstellt, wobei die erste Datenstruktur (301) die Inter-Vorrichtungskommunikation durch Betriebssignale auf einer ersten Ebene (L1) spezifiziert, die Vorrichtungs-unabhängig ist;
- wobei die zweite Datenstruktur (302) konfigurierbare technische Parameter der Gebäudeautomationsvorrichtungen (111, 112, 115, 116) darstellt, wobei die technischen Parameter Kommunikationsparameter (A, B) der Gebäudeautomationsvorrichtungen (111, 112, 115, 116) umfassen, die spezifizieren, wie die Vorrichtungen die Inter-Vorrichtungskommunikation während des Betriebs in der Form von Datenpaketen (119) vornehmen, wobei die Betriebssignale auf einer zweiten Ebene (L2) sind, die Vorrichtungsspezifisch ist;
Verarbeiten (203-02) der ersten Datenstruktur (301) und der zweiten Datenstruktur (302)
- durch Mappen (L1/L2) der Betriebssignale auf der ersten Ebene (L1) auf die Betriebssignale auf der zweiten Ebene (L2, A, B, X) in Abhängigkeit von den technischen Parametern der Sendervorrichtung (115) und der Empfängervorrichtung (111, 112), und
- durch Bestimmen von Konfigurationseinstellungen ({C}), welche Kommunikationsparameter anpassen, die zum Senden und zum Empfangen der Datenpakete (119) durch die Gebäudeautomationsvorrichtungen (111, 112, 115, 116) in den Betriebssignalen auf der zweiten Ebene (L2, A, B, X) erforderlich sind; Übertragen (203-03) der Konfigurationseinstellungen ({C}) an die Paare (115/111, 115/112) der Gebäudeautomationsvorrichtungen (111, 112, 115, 116); und
Anwenden (203-04) der Konfigurationseinstellungen ({C}) als Software-Einstellungen auf Speichereinheiten der Gebäudeautomationsvorrichtungen (111, 112, 115, 116), um es mindestens einem Teilsatz der Gebäudeautomationsvorrichtungen (111, 112, 115, 116) zu ermöglichen, die Betriebssignale auf der zweiten Ebene (L2) zu senden und zu empfangen.

2. Verfahren nach Anspruch 1,
wobei das Übertragen (203-03) von einer Konfigurationsvorrichtung (118) vorgenommen wird,
die kommunikativ mit den Gebäudeautomationsvorrichtungen (111, 112, 115, 116) in mindestens einer Kommunikationsrichtung gekoppelt ist.

3. Verfahren nach Anspruch 2,
wobei das Empfangen (203-01) und Verarbeiten (203-02) von einer Verarbeitungseinheit (118-1) vorgenommen wird, die ein integraler Bestandteil der Konfigurationsvorrichtung (118) ist, und die geeignet ist, das Empfangen und Verarbeiten durch Interagieren mit einem Konfigurationsbenutzer (152) über eine Benutzerschnittstelle vorzunehmen, und wobei die erste Datenstruktur (301), welche die Funktion des technischen Systems (102) während des zukünftigen Betriebs (204) darstellt, durch diese Interaktion mit dem Konfigurationsbenutzer (152) empfangen wird.

4. Verfahren (203) nach einem der Ansprüche 1 bis 3,
wobei die Schritte Empfangen, Verarbeiten, Übertragen und Anwenden vorgenommen werden, um Konfigurationseinstellungen für eine bestimmte Gebäudeautomationsvorrichtung (116) zu erhalten, die - während des zukünftigen Betriebs (204) des technischen Systems (102) - als Wandlervorrichtung (116) dient, wobei die Wandlervorrichtung Betriebssignale auf der ersten Ebene ({S}L1) empfängt, und die Betriebssignale auf der zweiten Ebene ({S}L2), und umgekehrt, zwischen Vorrichtungen in Paaren (115/111, 115/112) sendet.

5. Verfahren (203) nach Anspruch 4,
wobei die Wandlervorrichtung (116) ein Mapping (L1/L2) verwendet, das mindestens teilweise dem Mapping während der Verarbeitung (203-02) der ersten Datenstruktur (301) und der zweiten Datenstruktur (302) entspricht.

6. Verfahren (203) nach einem der Ansprüche 1 bis 5,
wobei die Konfigurationseinstellungen ({C}) an Paare von Gebäudeautomationsvorrichtungen (115/112, 115/111) übertragen (203-03) und auf diese angewendet werden (203-04), so dass, während des Betriebs (204), die Sendervorrichtung (115) bewirkt, dass die empfangende Gebäudeautomationsvorrichtung (111, 112) den Status ändert, und ihre auf das Gebäude bezogene Funktion anders vornimmt, und/oder die Sendervorrichtung Statusinformationen an die Empfängervorrichtung überträgt.

7. Verfahren (203) nach einem der Ansprüche 1 bis 6,
wobei die Konfigurationseinstellungen ({C}) an die Gebäudeautomationsvorrichtungen (111, 112, 115, 116) gesendet (203-03) und auf diese angewendet werden (203-04), so dass die Gebäudeautomationsvorrichtungen die Betriebsparameter ihrer auf das Gebäude bezogenen Funktion innerhalb minimaler und maximaler Einstellungen ändern.

8. Verfahren (203) nach einem der Ansprüche 1 bis 7,
wobei es die Konfigurationseinstellungen ({C}) einem weiteren Teilsatz der Gebäudeautomationsvorrichtungen (115, 116) ermöglichen, die Betriebssignale ({S}L1) auf der ersten Ebene zu senden und zu empfangen.

9. Verfahren (203) nach Anspruch 8,
wobei es die Konfigurationseinstellungen ({C}) dem ersten Teilsatz der Gebäudeautomationsvorrichtungen (115, 116) ermöglichen, die Betriebssignale ({S}L2) auf der zweiten, Vorrichtungs-spezifischen Ebene zu senden und zu empfangen, die aus der Gruppe KNX, BACnet, Zigbee, free@home, Z-Wave, OpenAdr, MQTT, Modbus und LonWorks ausgewählt wird.

10. Verfahren (203) nach einem der vorhergehenden Ansprüche,
wobei das Empfangen (203-01) der ersten Datenstruktur (301) und der zweiten Datenstruktur (302) umfasst, ein Funktion-auf-Kommunikation-Mapping (L3, L1) mit Beziehungen zwischen den auf das Gebäude bezogenen Funktionen der Gebäudeautomationsvorrichtungen auf die Kommunikationsfunktion der Gebäudeautomationsvorrichtungen zu empfangen.

11. Computer-implementiertes Verfahren (204) zum Betreiben eines technischen Systems (102) mit einer Vielzahl von Gebäudeautomationsvorrichtungen (111, 112, 115, 116), die in einem Gebäude (101) installiert sind, um auf das Gebäude bezogene Funktionen vorzunehmen, wobei das Verfahren (204) umfasst:
Empfangen (204-01) eines Mapping (L2, A, B, X) für Betriebssignale ({S}), die auf Prozessor/Speichereinheiten der Gebäudeautomationsvorrichtungen (111, 112, 115, 116) angewendet werden können, wobei das Mapping dem Mapping (L2, A, B, X) von Betriebssignalen ({S}) entspricht, die durch den Verarbeitungsschritt (203-02) des Verfahrens nach einem der Ansprüche 1 bis 10 erhalten werden;
Empfangen (204-02) von Betriebssignalen ({S}) von der ersten Gebäudeautomationsvorrichtung, die als Sendervorrichtung (115) dient;
Umwandeln (204-03) der Betriebssignale ({S}) gemäß dem Mapping; und
Senden (204-04) des umgewandelten Betriebssignals ({S}) an eine zweite Gebäudeautomationsvorrichtung, die als Empfängervorrichtung (111, 112) dient.

12. Computerprogrammprodukt, welches - wenn es in einen Speicher eines Computers geladen wird und von mindestens einem Prozessor des Computers ausgeführt wird - die Schritte des Computerimplementierten Verfahrens (203) zur Konfiguration einer Vielzahl von Gebäudeautomationsvorrichtungen nach einem der Ansprüche 1 bis 10 vornimmt.

13. Computerprogrammprodukt, welches - wenn es in einen Speicher eines Computers geladen wird und von mindestens einem Prozessor des Computers ausgeführt wird - die Schritte des Computerimplementierten Verfahrens (204) zum Betreiben eines technischen Systems (102) in einem Gebäude (101) nach Anspruch 11 vornimmt.

14. Computervorrichtung (118) mit einem Prozessor und einem Speicher zum Konfigurieren einer Vielzahl von Gebäudeautomationsvorrichtungen (111, 112, 115, 116), die als technisches System (102) in einem Gebäude (101) installiert sind, wobei die Computervorrichtung (118) geeignet ist, ein Verfahren (203) zur Konfiguration der Gebäudeautomationsvorrichtungen nach einem der Ansprüche 1 bis 10 vorzunehmen.

15. Computervorrichtung (116), welche geeignet ist, in einem technischen System (102) mit einer Vielzahl von Gebäudeautomationsvorrichtungen (111, 112, 115, 116) installiert zu werden, die in einem Gebäude (101) installiert sind, um auf das Gebäude bezogene Funktionen vorzunehmen, wobei die Computervorrichtung (116) eine der Gebäudeautomationsvorrichtungen ist, wobei die Wandlervorrichtung (116) **dadurch gekennzeichnet ist, dass** diese geeignet ist, das Computerimplementierte Verfahren (204) nach Anspruch 11 vorzunehmen.

## Revendications

1. Procédé mis en œuvre par ordinateur (203) pour configurer une pluralité de dispositifs d'automatisation de bâtiment (111, 112, 115, 116) qui sont installés en tant que système technique (102) dans un bâtiment (101) pour réaliser des fonctions liées au bâtiment, le procédé (203) étant réalisé avant le fonctionnement (204) du système technique (102), le procédé (203) comprenant :
la réception (203-01) d'une première structure de données (301) et d'une seconde structure de données (302),
• la première structure de données (301) représentant la fonction du système technique (102) pendant un fonctionnement futur en spécifiant une communication entre dispositifs entre des paires (115/111, 115/112) de dispositifs d'automatisation de bâtiment (111, 112, 115, 116), la première structure de données (301) spécifiant la communication entre dispositifs par des signaux de fonctionnement à un premier niveau (L1) étant agnostiques au dispositif ;
• la seconde structure de données (302) représentant des paramètres techniques configurables des dispositifs d'automatisation de bâtiment (111, 112, 115, 116), les paramètres techniques comprenant des paramètres de communication (A, B) des dispositifs d'automatisation de bâtiment (111, 112, 115, 116) qui spécifient comment les dispositifs réalisent la communication entre dispositifs pendant le fonctionnement sous forme de paquets de données (119), les signaux de fonctionnement étant à un second niveau (L2) spécifiques au dispositif ;
le traitement (203-02) de la première structure de données (301) et de la seconde structure de données (302)
• par mappage (L1/L2) des signaux de fonctionnement au premier niveau (L1) avec les signaux de fonctionnement au second niveau (L2, A, B, X) en fonction des paramètres techniques du dispositif d'envoi (115) et du dispositif récepteur (111, 112), et
• en déterminant des réglages de configuration ({C}) qui adaptent des paramètres de communication qui sont nécessaires à l'envoi et à la réception des paquets de données (119) par les dispositifs d'automatisation de bâtiment (111, 112, 115, 116) dans les signaux de fonctionnement au second niveau (L2, A, B, X) ;
la transmission (203-03) des réglages de configuration ({C}) aux paires (115/111, 115/112) des dispositifs d'automatisation de bâtiment (111, 112, 115, 116) ; et
l'application (203-04) des réglages de configuration ({C}) en tant que réglages logiciels à des unités de mémoire des dispositifs d'automatisation de bâtiment (111, 112, 115, 116) pour permettre à au moins un sous-ensemble des dispositifs d'automatisation de bâtiment (111, 112, 115, 116) d'envoyer et recevoir les signaux de fonctionnement au second niveau (L2).

2. Procédé selon la revendication 1, la transmission (203-03) étant réalisée par un dispositif de configuration (118) qui est couplé de manière communicative aux dispositifs d'automatisation de bâtiment (111, 112, 115, 116) dans au moins une direction de communication.

3. Procédé selon la revendication 2, la réception (203-01) et le traitement (203-02) étant réalisés par une unité de traitement (118-1) qui est une partie intégrée du dispositif de configuration (118), et qui est adaptée pour réaliser la réception et le traitement par interaction avec un utilisateur de configuration (152) via une interface utilisateur, et la première structure de données (301) représentant la fonction du système technique (102) pendant un fonctionnement futur (204) étant reçue par cette interaction avec l'utilisateur de configuration (152).

4. Procédé (203) selon l'une quelconque des revendications 1 à 3, les étapes de réception, de traitement, de transmission et d'application étant réalisées pour obtenir des réglages de configuration pour un dispositif d'automatisation de bâtiment particulier (116) qui, pendant le fonctionnement futur (204) du système technique (102), agit comme un dispositif convertisseur (116), le dispositif convertisseur recevant des signaux de fonctionnement au premier niveau ({S}L1), et qui envoie des signaux de fonctionnement au second niveau ({S}L2) et vice versa entre dispositifs en paires (115/111, 115/112).

5. Procédé (203) selon la revendication 4, le dispositif convertisseur (116) utilisant un mappage (L1/L2) qui correspond au moins partiellement au mappage pendant le traitement (203-02) de la première structure de données (301) et de la seconde structure de données (302).

6. Procédé (203) selon l'une quelconque des revendications 1 à 5, les réglages de configuration ({C}) étant transmis (203-03) et appliqués (203-04) à des paires de dispositifs d'automatisation de bâtiment (115/112, 115/111) de telle sorte que pendant le fonctionnement (204), le dispositif d'envoi (115) amène le dispositif d'automatisation de bâtiment de réception à changer l'état et à réaliser sa fonction liée au bâtiment différemment, et/ou le dispositif d'envoi transmet des informations d'état au dispositif récepteur.

7. Procédé (203) selon l'une quelconque des revendications 1 à 6, les réglages de configuration ({C}) étant envoyés (203-03) et appliqués (203-04) aux dispositifs d'automatisation de bâtiment (111, 112, 115, 116) de telle sorte que les dispositifs d'automatisation de bâtiment changent les paramètres de fonctionnement de leur fonction liée au bâtiment sans dépasser des réglages minimum et maximum.

8. Procédé (203) selon l'une quelconque des revendications 1 à 7, les réglages de configuration ({C}) permettant à un sous-ensemble supplémentaire des dispositifs d'automatisation de bâtiment (115, 116) d'envoyer et de recevoir les signaux de fonctionnement ({S}L1) au premier niveau.

9. Procédé (203) selon la revendication 8, les réglages de configuration ({C}) permettant au premier sous-ensemble des dispositifs d'automatisation de bâtiment (115, 116) d'envoyer et de recevoir les signaux de fonctionnement ({S}L2) au second niveau spécifié par l'appareil, étant sélectionné dans le groupe constitué par KNX, BACnet, Zigbee, free@home, Z-Wave, OpenAdr, MQTT, Modbus et LonWorks.

10. Procédé (203) selon l'une quelconque des revendications précédentes, la réception (203-01) de la première structure de données (301) et de la seconde structure de données (302) comprenant la réception d'un mappage fonction-communication (L3, L1), avec des relations entre les fonctions liées au bâtiment des dispositifs d'automatisation de bâtiment et la fonction communication des dispositifs d'automatisation de bâtiment.

11. Procédé mis en œuvre par ordinateur (204) pour faire fonctionner un système technique (102) avec une pluralité de dispositifs d'automatisation de bâtiment (111, 112, 115, 116) qui sont installés dans un bâtiment (101) pour réaliser des fonctions liées au bâtiment, le procédé (204) comprenant :
la réception (204-01) d'un mappage (L2, A, B, X) pour des signaux de fonctionnement ({S}) applicables aux unités processeur/mémoire des dispositifs d'automatisation de bâtiment (111, 112, 115, 116), le mappage correspondant au mappage (L2, A, B, X) de signaux de fonctionnement ({S}) obtenus par l'étape de traitement (203-02) du procédé selon l'une quelconque des revendications 1-10 ;
la réception (204-02) de signaux de fonctionnement ({S}) provenant du premier dispositif d'automatisation de bâtiment agissant comme dispositif d'envoi (115) ;
la conversion (204-03) des signaux de fonctionnement ({S}) en fonction du mappage ; et
l'envoi (204-04) du signal de fonctionnement converti ({S}) au second dispositif d'automatisation de bâtiment agissant comme dispositif récepteur (111, 112) .

12. Produit de programme informatique, qui lorsqu'il est chargé dans une mémoire d'un ordinateur et exécuté par au moins un processeur de l'ordinateur, réalise les étapes du procédé mis en œuvre par ordinateur (203) pour configurer une pluralité de dispositifs d'automatisation de bâtiment selon l'une quelconque des revendications 1-10.

13. Produit de programme informatique, qui lorsqu'il est chargé dans une mémoire d'un ordinateur et exécuté par au moins un processeur de l'ordinateur, réalise les étapes du procédé mis en œuvre par ordinateur (204) pour faire fonctionner un système technique (102) dans un bâtiment (101) selon la revendication 11.

14. Dispositif informatique (118) avec processeur et mémoire pour configurer une pluralité de dispositifs d'automatisation de bâtiment (111, 112, 115, 116) qui sont installés en tant que système technique (102) dans un bâtiment (101), le dispositif informatique (118) étant adapté pour réaliser un procédé (203) pour configurer les dispositifs d'automatisation de bâtiment selon l'une quelconque des revendications 1-10.

15. Dispositif informatique (116) adapté pour être installé sur un système technique (102) avec une pluralité de dispositifs d'automatisation de bâtiment (111, 112, 115, 116) qui sont installés dans un bâtiment (101) pour réaliser des fonctions liées au bâtiment, le dispositif informatique (116) étant un des dispositifs d'automatisation de bâtiment, le dispositif convertisseur (116) étant adapté pour réaliser le procédé implémenté par ordinateur (204) selon la revendication 11.
